(19) Europäisches Patentamt
European Patent Office
Office européen des brevets

(11) EP 3 498 492 B1

(12) EUROPEAN PATENT SPECIFICATION

(45) Date of publication and mention of the grant of the patent:
**30.09.2020 Bulletin 2020/40**

(21) Application number: **18207468.2**

(22) Date of filing: **21.11.2018**

(51) Int Cl.:
***B60C 1/00*** (2006.01) ***C08C 19/25*** (2006.01)
***C08C 19/44*** (2006.01) ***C08F 236/10*** (2006.01)
***C08F 136/06*** (2006.01) ***C08C 19/22*** (2006.01)
***C08L 7/00*** (2006.01) ***C08L 9/06*** (2006.01)
***C08K 3/04*** (2006.01) ***C08K 3/36*** (2006.01)
***C08K 3/26*** (2006.01) ***C08K 3/34*** (2006.01)
***C08K 5/3477*** (2006.01) ***C08K 5/548*** (2006.01)
***C08L 47/00*** (2006.01)

(54) **RUBBER COMPOSITION FOR TIRES AND PNEUMATIC TIRE**

KAUTSCHUKZUSAMMENSETZUNG FÜR REIFEN UND LUFTREIFEN

COMPOSITION DE CAOUTCHOUC POUR PNEUS ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2017 JP 2017241693**

(43) Date of publication of application:
**19.06.2019 Bulletin 2019/25**

(73) Proprietor: **SUMITOMO RUBBER INDUSTRIES, LTD.**
**Chuo-ku**
**Kobe-shi**
**Hyogo 651-0072 (JP)**

(72) Inventors:
- **OSHIMO, Masaki**
  **Kobe-shi, Hyogo 651-0072 (JP)**
- **SATO, Daisuke**
  **Kobe-shi, Hyogo 651-0072 (JP)**
- **MABUCHI, Takahiro**
  **Kobe-shi, Hyogo 651-0072 (JP)**

(74) Representative: **TBK**
**Bavariaring 4-6**
**80336 München (DE)**

(56) References cited:
**EP-A1- 2 835 383** **EP-A1- 2 857 446**
**DE-T5-112013 003 160**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 498 492 B1

## Description

### TECHNICAL FIELD

The present invention relates to a rubber composition for tires and a pneumatic tire formed from the rubber composition.

### BACKGROUND ART

With the recent increase in concern about environmental issues, the demand for fuel efficient automobiles has been increasing. There is also a need for rubber compositions for automotive tires having excellent fuel economy.

For example, it is known to reduce the amount of reinforcing fillers in order to improve fuel economy. However, this method tends to cause rubber compositions to have reduced heat build-up and reinforcement, thereby resulting in deterioration in properties such as wet grip performance and abrasion resistance. Thus, these properties are usually in a trade-off relationship with fuel economy, and it is difficult to obtain well-balanced properties.

### SUMMARY OF INVENTION

### TECHNICAL PROBLEM

The present invention aims to solve the problem and provide a pneumatic tire that provides a balanced improvement of abrasion resistance, wet grip performance, and fuel economy.

### SOLUTION TO PROBLEM

The present invention relates to a rubber composition for tires, containing: a rubber component including an aromatic vinyl-conjugated diene copolymer that contains aromatic vinyl units derived from an aromatic vinyl compound and conjugated diene units derived from a conjugated diene compound; carbon black; and a silica having a nitrogen adsorption specific surface area of 40 $m^2/g$ or more, the copolymer containing at least 80% of isolated aromatic vinyl units based on the total aromatic vinyl units, the copolymer having a glass transition temperature width of more than 10°C but less than 20°C as determined by differential scanning calorimetry, the rubber component including, based on 100% by mass thereof, 1 to 60% by mass of the copolymer and 0 to 99% by mass of an isoprene-based rubber, the rubber composition containing 10 parts by mass or more of the silica per 100 parts by mass of the rubber component.

Preferably, the rubber composition contains a particulate zinc carrier that includes a silicate particle and finely divided zinc oxide or finely divided basic zinc carbonate supported on a surface of the silicate particle.

Preferably, the silica has a nitrogen adsorption specific surface area of 160 $m^2/g$ or more.

Preferably, the carbon black has an oil absorption number of compressed sample of 100 to 180 mL/100 g.

Preferably, the rubber composition contains 90 parts by mass or more of the silica per 100 parts by mass of the rubber component.

Preferably, the rubber composition contains a plasticizer in an amount of 50 parts by mass or more per 100 parts by mass of the rubber component.

Preferably, the rubber composition contains a resin.

Preferably, the rubber component includes a modified polymer.

Preferably, the rubber composition contains a tetrazine compound represented by the following formula (1):

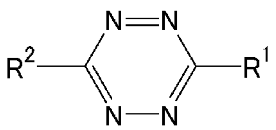

(1)

wherein $R^1$ and $R^2$ may be the same or different and each represent a hydrogen atom, $-COOR^3$ in which $R^3$ represents either a hydrogen atom or an alkyl group, or a C1-C11 monovalent hydrocarbon group optionally containing a heteroatom, and $R^1$ and $R^2$ may each form a salt.

Preferably, the rubber composition contains a mercapto silane coupling agent.

Preferably, the rubber composition contains a farnesene resin produced by polymerizing farnesene.

Another aspect of the present invention relates to a pneumatic tire, including a cap tread formed from the rubber composition.

ADVANTAGEOUS EFFECTS OF INVENTION

The rubber composition of the present invention contains a rubber component including a specific aromatic vinyl-conjugated diene copolymer, carbon black, and a specific silica. Such a rubber composition provides a balanced improvement of abrasion resistance, wet grip performance, and fuel economy.

DESCRIPTION OF EMBODIMENTS

The aromatic vinyl-conjugated diene copolymer in the present invention contains aromatic vinyl units derived from an aromatic vinyl compound and conjugated diene units derived from a conjugated diene compound. The copolymer contains at least 80% of isolated aromatic vinyl units based on the total aromatic vinyl units, and has a glass transition temperature width of more than 10°C but less than 20°C as determined by differential scanning calorimetry.

The term "isolated aromatic vinyl unit" refers to an aromatic vinyl structural unit in which the number of repeating aromatic vinyl units in the copolymer chain is one, i.e., aromatic vinyl units are not sequentially connected. A higher proportion of isolated aromatic vinyl units indicates that a larger number of aromatic vinyl units are present alone in the copolymer chain. On the other hand, aromatic vinyl structural units in which the number of repeating aromatic vinyl units in the copolymer chain is two or more, i.e., aromatic vinyl units are sequentially connected, are each referred to as a "long-sequential aromatic vinyl". As the long-sequential aromatic vinyl content is increased, the aromatic vinyl units tend to be increasingly localized in a part of the copolymer chain.

The proportion of isolated aromatic vinyl units in the copolymer is preferably 80 to 95%, more preferably 80 to 90%, based on the total aromatic vinyl units. A higher proportion of isolated aromatic vinyl units indicates a higher proportion of aromatic vinyl units which are present alone in the copolymer chain. When the proportion is not lower than 80%, the copolymer provides improved abrasion resistance, wet grip performance, and fuel economy.

The proportion of isolated aromatic vinyl units in the copolymer chain may be determined by $^1H$-NMR analysis of the copolymer. Specifically, the proportion of isolated aromatic vinyl units may be determined by analyzing sequences of aromatic vinyl units on the basis of the NMR spectrum of the copolymer.

The proportion of isolated aromatic vinyl units may be adjusted, for example, by controlling polymerization reaction temperature or continuously introducing the conjugated diene compound. In the method of controlling polymerization reaction temperature, it is preferred to control polymerization temperature so that the reaction rate of the aromatic vinyl compound is kept equal to the reaction rate of the conjugated diene compound. In the method of continuously introducing the conjugated diene compound, it is preferred to start the reaction with a reduced initial supply of the conjugated diene compound, and then continuously supply the remaining amount of the conjugated diene compound to appropriately adjust the proportion of isolated aromatic vinyl units in the produced copolymer chain.

A narrower glass transition temperature width (ΔTg) of the copolymer indicates a structure in which the aromatic vinyl units are more uniformly distributed in the copolymer chain. A broader ΔTg of the copolymer indicates a structure in which the aromatic vinyl units are more densely localized in a part of the copolymer chain. When ΔTg is large, the aromatic vinyl units are so densely localized in a part of the copolymer chain that it is difficult to obtain the fuel economy desired for automotive tires. When ΔTg is too small, the distribution range of the aromatic vinyl units is so narrow that abrasion resistance and wet grip performance cannot be sufficiently improved. In order to further improve the balance of abrasion resistance, wet grip performance, and fuel economy, the ΔTg of the copolymer is preferably 11 to 19°C, more preferably 11 to 15°C.

ΔTg may be determined using a differential scanning calorimeter (DSC). Specifically, in DSC analysis, a sample may be cooled to -100°C in a nitrogen atmosphere, followed by heating from -100°C to 100°C at a rate of 10°C/min. The ΔTg of the sample may be calculated from the changes in temperature and heat flow during the heating. The ΔTg is defined as the difference between the extrapolated onset and extrapolated end of the baseline shift associated with the transition in the heat flow curve, i.e. the temperature difference between the inflection points in the glass transition temperature range.

In view of strength, the copolymer preferably has a Mooney viscosity ($ML_{1+4}$) of 10 or higher, more preferably 20 or higher. In view of processability, the $ML_{1+4}$ is also preferably 200 or lower, more preferably 150 or lower. The Mooney viscosity ($ML_{1+4}$) of the copolymer is measured at 125°C in accordance with JIS K6300 (1994).

In view of the balance of abrasion resistance, wet grip performance, and fuel economy, the aromatic vinyl unit content of the copolymer is preferably at least 10% by mass but not more than 50% by mass based on a total of 100% by mass of conjugated diene units and aromatic vinyl units. Also in view of the balance of abrasion resistance, wet grip performance, and fuel economy, the vinyl bond content of the conjugated diene units of the copolymer is preferably at least 10 mol% but not more than 80 mol% based on 100 mol% of the total conjugated diene units. For applications requiring higher fuel economy, the aromatic vinyl unit content and the vinyl bond content of the copolymer are more preferably less than 30% by mass and at least 50 mol%, respectively. For applications requiring higher abrasion resistance or wet grip performance, the aromatic vinyl unit content and the vinyl bond content of the copolymer are more preferably

at least 30% by mass and less than 50 mol%, respectively. For applications where abrasion resistance or wet grip performance is more important, the aromatic vinyl unit content and the vinyl bond content of the copolymer may be at least 30% by mass and at least 50 mol%, respectively. The vinyl bond content of the copolymer is determined by infrared spectroscopy using the intensity of absorption around 910 $cm^{-1}$ which corresponds to the absorption peak for the vinyl group.

In view of fuel economy, the molecular weight distribution of the copolymer is preferably 1 to 5, more preferably 1 to 2. The molecular weight distribution is determined by measuring the number average molecular weight (Mn) and weight average molecular weight (Mw) of the copolymer by gel permeation chromatography (GPC) and dividing the Mw by the Mn. In order to improve backbone strength to improve abrasion resistance, to reduce the number of molecular ends to reduce rolling resistance, and to improve wet grip performance, the Mw of the aromatic vinyl-conjugated diene copolymer is preferably 1,000,000 or more, more preferably 1,000,000 to 3,000,000, still more preferably 1,000,000 to 2,000,000. The Mw and Mn of the copolymer may be measured using, for example, "Prominence" available from Shimadzu Corporation. The column used may be, for example, "PLgel" available from Agilent. The molecular weight standards used may be, for example, polystyrene standards available from Tosoh Corporation.

The following will describe various components which may be used to produce the copolymer. The copolymer may be produced by copolymerizing an aromatic vinyl compound and a conjugated diene compound using a polymerization initiator.

Examples of the conjugated diene compound include 1,3-butadiene, isoprene, 1,3-pentadiene, 2,3-dimethyl-1,3-butadiene, 1,3-hexadiene, myrcene, and farnesene. The conjugated diene compound is preferably 1,3-butadiene or isoprene.

Examples of the aromatic vinyl compound include styrene, $\alpha$-methylstyrene, vinyltoluene, vinylnaphthalene, divinylbenzene, trivinylbenzene, and divinylnaphthalene. The aromatic vinyl compound is preferably styrene.

Examples of the polymerization initiator include alkali metal-polar compound complexes, alkali metal-containing oligomers, organic alkali metal compounds, Ziegler-Natta catalysts, and metallocene catalysts. The polymerization initiator is preferably an organic alkali metal compound. The polymerization initiators may be used alone or in combinations of two or more.

Examples of the organic alkali metal compound include organic alkali metal compounds having a hydrocarbyl group, such as ethyllithium, n-propyllithium, isopropyllithium, n-butyllithium, sec-butyllithium, tert-butyllithium, tert-octyllithium, n-decyllithium, phenyllithium, 2-naphthyllithium, 2-butylphenyllithium, 4-phenylbutyllithium, cyclohexyllithium, cyclopentyllithium, 1,4-dilithio-2-butene, 1,3,3-trilithiooctyne, sodium naphthalenide, sodium biphenylide, and potassium naphthalenide; and organic alkali metal compounds having a nitrogen-containing group, such as methylaminopropyllithium, diethylaminopropyllithium, tert-butyldimethylsilyloxypropyllithium, N-morpholinopropyllithium, lithium hexamethyleneimide, lithium pyrrolidide, lithium piperidide, lithium heptamethyleneimide, lithium dodecamethyleneimide, and compounds produced by reacting isoprene with 3-(dimethylamino)propyllithium or 3-(diethylamino)propyllithium. The organic alkali metal compound is preferably n-butyllithium.

The amount of the polymerization initiator is preferably 0.01 mmol to 15 mmol per 100 g of the combined amount of the aromatic vinyl compound and the conjugated diene compound.

The copolymerization of the aromatic vinyl compound and the conjugated diene compound is preferably performed in a solvent. The solvent may be any solvent that does not deactivate the polymerization initiator, preferably a hydrocarbon solvent. Examples of the hydrocarbon solvent include aliphatic hydrocarbons, aromatic hydrocarbons, and alicyclic hydrocarbons. The solvents may be used alone or in combinations of two or more. The solvent may be a mixture of aliphatic and alicyclic hydrocarbons, such as industrial hexane.

Examples of the aliphatic hydrocarbons include propane, n-butane, iso-butane, n-pentane, iso-pentane, 2-methylpentane, 3-methylpentane, n-hexane, propene, 1-butene, iso-butene, trans-2-butene, cis-2-butene, 1-pentene, 2-pentene, 1-hexene, and 2-hexene. Examples of the aromatic hydrocarbons include benzene, toluene, xylene, and ethylbenzene. Examples of the alicyclic hydrocarbons include cyclopentane, cyclohexane, and methylcyclopentane.

To improve fuel economy and abrasion resistance, the copolymer may contain a unit derived from a modifier having a heteroatom and/or silicon atom at least at the initiation end or termination end or within the chain of the copolymer.

The copolymer may be produced in the presence of an agent for controlling the vinyl bond content of the conjugated diene units or an agent for controlling the distribution of the conjugated diene units and aromatic vinyl units in the copolymer chain (hereinafter, referred to collectively as "regulators") .

Examples of the regulators include ether compounds, tertiary amines, phosphine compounds, alkali metal alkoxides, and alkali metal phenoxides. Examples of the ether compounds include cyclic ethers such as tetrahydrofuran, tetrahydropyran, and 1, 4-dioxane; aliphatic monoethers such as diethyl ether and dibutyl ether; aliphatic diethers such as ethylene glycol dimethyl ether, ethylene glycol diethyl ether, and ethylene glycol dibutyl ether; aliphatic triethers such as diethylene glycol diethyl ether and diethylene glycol dibutyl ether; and aromatic ethers such as diphenyl ether, anisole, 1,2-dimethoxybenzene, and 3,4-dimethoxytoluene. Examples of the tertiary amines include triethylamine, tripropylamine, tributylamine, 1,1,2,2-tetramethylethylenediamine, N,N-diethylaniline, pyridine, and quinoline. Examples of the phosphine compounds include trimethylphosphine, triethylphosphine, and triphenylphosphine. Examples of the alkali metal alkoxides include sodium-tert-butoxide, potassium-tert-butoxide, sodium-tert-pentoxide, and potassium-tert-pentoxide. Examples of the alkali metal phenoxides include sodium phenoxide and potassium phenoxide. These regulators may be used alone or in combinations of two or more.

The amount of the copolymer based on 100% by mass of the rubber component is 60% by mass or less, preferably 50% by mass or less, more preferably 40% by mass or less, still more preferably 30% by mass or less. When the amount is not more than 60% by mass, good abrasion resistance and low cost tend to be obtained. Also, the amount of the copolymer is 1% by mass or more, preferably 5% by mass or more, more preferably 10% by mass or more, still more preferably 15% by mass or more. When the amount is not less than 1% by mass, the effects of improving abrasion resistance, wet grip performance, and fuel economy tend to be easily achieved.

The rubber component of the rubber composition of the present invention preferably further includes a modified polymer other than the copolymer. Its use together with the copolymer can synergistically increase the effects of improving properties.

The modified polymer may be any modified polymer (especially any modified rubber) having a functional group interactive with an inorganic filler such as silica. For example, the modified polymer may be a chain end-modified rubber obtained by modifying at least one chain end of a rubber with a compound (modifier) having the functional group (i.e., a chain end-modified rubber terminated with the functional group); a backbone-modified rubber having the functional group in the backbone; a backbone- and chain end-modified rubber having the functional group in both the backbone and chain end (e.g., a backbone- and chain end-modified rubber in which the backbone has the functional group and at least one chain end is modified with the modifier) ; or a chain end-modified rubber that has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted.

Examples of the rubber forming the skeleton of the modified rubber include natural rubber (NR), polyisoprene rubber (IR), polybutadiene rubber (BR), styrene-butadiene rubber (SBR), styrene-isoprene-butadiene rubber (SIBR), ethylene-propylene-diene rubber (EPDM), chloroprene rubber (CR), and acrylonitrile butadiene rubber (NBR) . These rubbers may be used alone or in combinations of two or more. Among these, BR or SBR (i.e. modified BR or modified SBR) is preferred, with BR (i.e. modified BR) being more preferred.

The modified rubber is preferably a modified conjugated diene polymer produced by a method that includes: modification step (A) of performing a modification reaction to introduce an alkoxysilane compound having two or more reactive groups, including an alkoxysilyl group, into the active terminal of a conjugated diene polymer that contains an active terminal and has a cis-1,4 bond content of 94.0% by mass or higher; and condensation step (B) of performing a condensation reaction of the residual group of the alkoxysilane compound introduced into the active terminal, in the presence of a condensation catalyst containing at least one element selected from the group consisting of the elements of Groups 4, 12, 13, 14, and 15 of the periodic table, wherein the conjugated diene polymer is produced by polymerization in the presence of a catalyst composition mainly containing a mixture of the following components (a) to (c):

component (a): a lanthanoid-containing compound which contains at least one element selected from the group consisting of lanthanoids, or a reaction product obtained by reaction between the lanthanoid-containing compound and a Lewis base;
component (b): at least one compound selected from the group consisting of aluminoxanes and organoaluminum compounds represented by the formula (3-1) : $AlR^{31}R^{32}R^{33}$ wherein $R^{31}$ and $R^{32}$ are the same or different and each represent a C1-C10 hydrocarbon group or a hydrogen atom, and $R^{33}$ is the same as or different from $R^{31}$ or $R^{32}$ and represents a C1-C10 hydrocarbon group; and
component (c): an iodine-containing compound which contains at least one iodine atom in its molecular structure.

Since the modified conjugated diene polymer is obtained by the introduction of the polyfunctional alkoxysilane compound and the subsequent condensation reaction of the residual group of the introduced alkoxysilane compound, it is difficult to identify the reaction sites in the polymer. Thus, it is, in fact, impossible or almost unpractical to identify the modified conjugated diene polymer directly from its structure or properties.

The modified step (A) includes performing a modification reaction to introduce an alkoxysilane compound having two or more reactive groups, including an alkoxysilyl group, into the active terminal of a conjugated diene polymer that contains an active terminal and has a cis-1,4 bond content of 94.0% by mass or higher.

The conjugated diene polymer contains an active terminal and has a cis-1, 4 bond content of 94.0% by mass or higher. The cis-1, 4 bond content is preferably 94.6% by mass or higher, more preferably 98.5% by mass or higher, still more preferably 99.0% by mass or higher, further preferably 99.2% by mass or higher. A cis-1,4 bond content of not

lower than 94.0% by mass tends to lead to sufficient performance on ice and snow, abrasion resistance, and tensile properties. Herein, the cis-1,4 bond content is calculated from signal intensities measured by NMR analysis.

The conjugated diene polymer may be, for example, a polymer containing repeating units derived from at least one monomer selected from the group consisting of 1,3-butadiene, isoprene, 2,3-dimethyl-1,3-butadiene, 1,3-pentadiene, 1,3-hexadiene, and myrcene. It may particularly suitably be a polymer containing repeating units derived from at least one monomer selected from the group consisting of 1,3-butadiene, isoprene, and 2,3-dimethyl-1,3-butadiene. Thus, in another suitable embodiment of the present invention, the modified conjugated diene polymer is formed from at least one conjugated diene compound selected from the group consisting of 1,3-butadiene, isoprene, and 2,3-dimethyl-1,3-butadiene.

Such a conjugated diene polymer may be produced by polymerization either in the presence or absence of a solvent. The solvent (polymerization solvent) used in the polymerization may be an inert organic solvent. Specific examples include C4-C10 saturated aliphatic hydrocarbons such as butane, pentane, hexane, and heptane; C6-C20 saturated alicyclic hydrocarbons such as cyclopentane and cyclohexane; monoolefins such as 1-butene and 2- butene; aromatic hydrocarbons such as benzene, toluene, and xylene; and halogenated hydrocarbons such as methylene chloride, chloroform, carbon tetrachloride, trichloroethylene, perchloroethylene, 1,2-dichloroethane, chlorobenzene, bromobenzene, and chlorotoluene.

The polymerization temperature in the production of the conjugated diene polymer is preferably -30°C to 200°C, more preferably 0°C to 150°C. The polymerization reaction may be carried out in any manner, such as using a batch reactor or continuously using, for example, a multistage continuous reactor. The polymerization solvent, if used, preferably has a monomer concentration of 5 to 50% by mass, more preferably 7 to 35% by mass. Moreover, in view of efficiency in the production of the conjugated diene polymer and in order to prevent deactivation of the conjugated diene polymer containing an active terminal, the polymerization system preferably contains as small an amount as possible of deactivating compounds such as oxygen, water, and carbon dioxide gas.

The conjugated diene polymer to be used for preparing the modified conjugated diene polymer is produced by polymerization in the presence of a catalyst composition (hereinafter, also referred to as "catalyst") mainly containing a mixture of the following components (a) to (c):

component (a): a lanthanoid-containing compound which contains at least one element selected from the group consisting of lanthanoids, or a reaction product obtained by reaction between the lanthanoid-containing compound and a Lewis base;

component (b): at least one compound selected from the group consisting of aluminoxanes and organoaluminum compounds represented by the formula (3-1) : $AlR^{31}R^{32}R^{33}$ wherein $R^{31}$ and $R^{32}$ are the same or different and each represent a C1-C10 hydrocarbon group or a hydrogen atom, and $R^{33}$ is the same as or different from $R^{31}$ or $R^{32}$ and represents a C1-C10 hydrocarbon group; and

component (c): an iodine-containing compound which contains at least one iodine atom in its molecular structure.

The use of such a catalyst enables production of a conjugated diene polymer having a cis-1, 4 bond content of 94.0% by mass or higher. Moreover, such a catalyst is useful for industrial production because it does not require polymerization at very low temperatures and is easy to handle.

The component (a) is a lanthanoid-containing compound which contains at least one element selected from the group consisting of lanthanoids, or a reaction product obtained by reaction between the lanthanoid-containing compound and a Lewis base. Preferred among the lanthanoids are neodymium, praseodymium, cerium, lanthanum, gadolinium, and samarium. Among these, neodymium is particularly preferred for the production method in the present invention. These lanthanoids may be used alone or in combinations of two or more. Specific examples of the lanthanoid-containing compound include lanthanoid carboxylates, alkoxides, β-diketone complexes, phosphates, and phosphites. Preferred among these are carboxylates or phosphates, with carboxylates being more preferred.

Specific examples of the lanthanoid carboxylates include carboxylates represented by the formula (3-2): $(R^{34}\text{-COO})_3M$ wherein M represents a lanthanoid, and each $R^{34}$ is the same or different and represents a C1-C20 hydrocarbon group. $R^{34}$ in formula (3-2) is preferably a saturated or unsaturated alkyl group and preferably a linear, branched, or cyclic alkyl group. The carboxyl group is bound to a primary, secondary, or tertiary carbon atom. Specific examples include salts of octanoic acid, 2-ethylhexanoic acid, oleic acid, stearic acid, benzoic acid, naphthenic acid, and the trade name "versatic acid" (available from Shell Chemicals, a carboxylic acid whose carboxyl group is bound to a tertiary carbon atom). Preferred among these are salts of versatic acid, 2-ethylhexanoic acid, or naphthenic acid.

Specific examples of the lanthanoid alkoxides include those represented by the formula (3-3): $(R^{35}O)_3M$ wherein M represents a lanthanoid. Specific examples of the alkoxy group represented by "$R^{35}O$" in formula (3-3) include 2-ethyl-hexylalkoxy, oleylalkoxy, stearylalkoxy, phenoxy, and benzylalkoxy groups. Preferred among these are 2-ethylhexylalkoxy and benzylalkoxy groups.

Specific examples of the lanthanoid β-diketone complexes include acetylacetone complexes, benzoylacetone

complexes, propionitrileacetone complexes, valerylacetone complexes, and ethylacetylacetone complexes. Preferred among these are acetylacetone complexes and ethylacetylacetone complexes.

Specific examples of the lanthanoid phosphates or phosphites include bis(2-ethylhexyl) phosphate, bis(1-methylheptyl) phosphate, bis(p-nonylphenyl) phosphate, bis(polyethyleneglycol-p-nonylphenyl) phosphate, (1-methylheptyl)(2-ethylhexyl) phosphate, (2-ethylhexyl)(p-nonylphenyl) phosphate, mono-2-ethylhexyl (2-ethylhexyl)phosphonate, mono-p-nonylphenyl (2-ethylhexyl)phosphonate, bis(2-ethylhexyl)phosphinic acid, bis(1-methylheptyl)phosphinic acid, bis(p-nonylphenyl)phosphinic acid, (1-methylheptyl)(2-ethylhexyl)phosphinic acid, and (2-ethylhexyl)(p-nonylphenyl)phosphinic acid salts. Preferred among these are bis(2-ethylhexyl) phosphate, bis(1-methylheptyl) phosphate, mono-2-ethylhexyl (2-ethylhexyl)phosphonate, and bis(2-ethylhexyl)phosphinic acid salts.

Among the above-mentioned lanthanoid-containing compounds, neodymium phosphates or neodymium carboxylates are particularly preferred, with neodymium versatate or neodymium 2-ethyl-hexanoate being most preferred.

In order to solubilize the lanthanoid-containing compound in a solvent or stably store it for a long period of time, it is also preferred to mix the lanthanoid-containing compound with a Lewis base, or react the lanthanoid-containing compound with a Lewis base to give a reaction product. The amount of the Lewis base per mol of the lanthanoid is preferably 0 to 30 mol, more preferably 1 to 10 mol. Specific examples of the Lewis base include acetylacetone, tetrahydrofuran, pyridine, N,N-dimethylformamide, thiophene, diphenyl ether, triethylamine, organophosphorus compounds, and monohydric or dihydric alcohols. The above-mentioned components (a) may be used alone or in combinations of two or more.

The component (b) is at least one compound selected from the group consisting of aluminoxanes and organoaluminum compounds represented by the formula (3-1) : $AlR^{31}R^{32}R^{33}$ wherein $R^{31}$ and $R^{32}$ are the same or different and each represent a C1-C10 hydrocarbon group or a hydrogen atom, and $R^{33}$ is the same as or different from $R^{31}$ or $R^{32}$ and represents a C1-C10 hydrocarbon group.

The term "aluminoxane" (hereinafter, also referred to as "alumoxane") refers to a compound having a structure represented by the following formula (3-4) or (3-5), and may include alumoxane association complexes as disclosed in Fine Chemical, 23, (9), 5 (1994), J. Am. Chem. Soc., 115, 4971 (1993), and J. Am. Chem. Soc., 117, 6465 (1995).

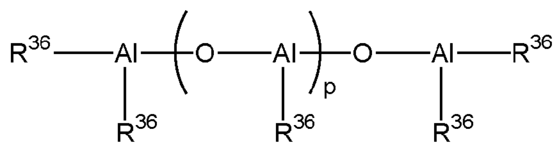

(3-4)

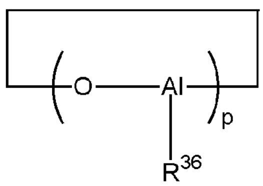

(3-5)

In formulas (3-4) and (3-5), each $R^{36}$ is the same or different and represents a C1-C20 hydrocarbon group, and p represents an integer of 2 or larger.

Specific examples of $R^{36}$ include methyl, ethyl, propyl, butyl, isobutyl, t-butyl, hexyl, isohexyl, octyl, and isooctyl groups. Preferred among these are methyl, ethyl, isobutyl, and t-butyl groups, with a methyl group being particularly preferred.

The symbol p is preferably an integer of 4 to 100.

Specific examples of the alumoxanes include methylalumoxane (hereinafter, also referred to as "MAO"), ethylalumoxane, n-propylalumoxane, n-butylalumoxane, isobutylalumoxane, t-butylalumoxane, hexylalumoxane, and isohexylalumoxane. Preferred among these is MAO. The alumoxanes may be produced by known methods, such as, for example, by adding a trialkylaluminum or dialkylaluminum monochloride to an organic solvent such as benzene, toluene, or xylene, and then adding water, steam, steam-containing nitrogen gas, or a salt having water of crystallization such as copper sulfate pentahydrate or aluminum sulfate hexadecahydrate to react them. These alumoxanes may be used alone or in combinations of two or more.

Specific examples of the organoaluminum compounds of formula (3-1) include trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum, diethylaluminum hydride, di-n-propylaluminum hydride, di-n-butylaluminum hydride, diisobutylaluminum hydride, dihexylaluminum hydride, diisohexylaluminum hydride, dioctylaluminum hydride, diisooctylaluminum hydride, ethylaluminum dihydride, n-propylaluminum dihydride, and isobutylaluminum dihydride. Preferred among these are diisobutylaluminum hydride, triethylaluminum, triisobutylaluminum, and diethylaluminum hydride, with diisobutylaluminum hydride being particularly preferred. These organoaluminum compounds may be used alone or in combinations of two or more.

The component (c) is an iodine-containing compound which contains at least one iodine atom in its molecular structure. The use of such an iodine-containing compound facilitates production of a conjugated diene polymer having a cis-1,4 bond content of 94.0% by mass or higher. The iodine-containing compound may be any compound that contains at least one iodine atom in its molecular structure, and examples include iodine, trimethylsilyl iodide, diethylaluminum iodide, methyl iodide, butyl iodide, hexyl iodide, octyl iodide, iodoform, diiodomethane, benzylidene iodide, beryllium iodide, magnesium iodide, calcium iodide, barium iodide, zinc iodide, cadmium iodide, mercury iodide, manganese iodide, rhenium iodide, copper iodide, silver iodide, and gold iodide.

In particular, the iodine-containing compound is preferably a silicon iodide compound represented by the formula (3-6) : $R^{37}{}_qSiI_{4-q}$ wherein each $R^{37}$ is the same or different and represents a C1-C20 hydrocarbon group or a hydrogen atom, and q represents an integer of 0 to 3; a hydrocarbon iodide compound represented by the formula (3-7): $R^{38}{}_rI_{4-r}$ wherein each $R^{38}$ is the same or different and represents a C1-C20 hydrocarbon group, and r represents an integer of 1 to 3; or iodine. Such silicon iodide compounds, hydrocarbon iodide compounds, and iodine are well soluble in organic solvents, and thus are easy to handle and useful for industrial production. Thus, in another suitable embodiment of the present invention, the component (c) is at least one iodine-containing compound selected from the group consisting of the silicon iodide compounds, hydrocarbon iodide compounds, and iodine.

Specific examples of the silicon iodide compounds (compounds of formula (3-6)) include trimethylsilyl iodide, triethylsilyl iodide, and dimethylsilyl diiodo. Preferred among these is trimethylsilyl iodide.

Specific examples of the hydrocarbon iodide compounds (compounds of formula (3-7)) include methyl iodide, butyl iodide, hexyl iodide, octyl iodide, iodoform, diiodomethane, and benzylidene iodide. Preferred among these are methyl iodide, iodoform, and diiodomethane.

Among these iodine-containing compounds, iodine, trimethylsilyl iodide, triethylsilyl iodide, dimethylsilyl diiodo, methyl iodide, iodoform, and diiodomethane are particularly preferred, with trimethylsilyl iodide being most preferred. These iodine-containing compounds may be used alone or in combinations of two or more.

The mixing ratio of the components (components (a) to (c)) may be appropriately selected as needed. For example, the amount of the component (a) per 100 g of the conjugated diene compound is preferably 0.00001 to 1.0 mmol, more preferably 0.0001 to 0.5 mmol. When the amount is not less than 0.00001 mmol, polymerization activity tends to increase. When the amount is not more than 1.0 mmol, the catalyst concentration tends not to be so high that a demineralization step can be required.

When the component (b) is an alumoxane, the amount of the alumoxane may be defined as the molar ratio of the component (a) to the aluminum (Al) contained in the alumoxane. The molar ratio of "component (a)" to "aluminum (Al) contained in alumoxane" is preferably 1:1 to 1:500, more preferably 1:3 to 1:250, still more preferably 1:5 to 1:200. When the amount of the alumoxane is within the range indicated above, the catalytic activity tends to further increase, and no step of removing catalyst residues tends to be required.

When the component (b) is an organoaluminum compound, the amount of the organoaluminum compound may be defined as the molar ratio of the component (a) to the organoaluminum compound. The molar ratio of "component (a) " to "organoaluminum compound" is preferably 1:1 to 1:700, more preferably 1:3 to 1:500. When the amount of the organoaluminum compound is within the range indicated above, the catalytic activity tends to further increase, and no step of removing catalyst residues tends to be required.

The amount of the component (c) may be defined as the molar ratio of the iodine atom contained in the component (c) to the component (a). The molar ratio of "iodine atom contained in component (c) " to "component (a) " is preferably 0.5 to 3.0, more preferably 1.0 to 2.5, still more preferably 1.2 to 2.0. When the molar ratio of "iodine atom contained in component (c) " to "component (a)" is not less than 0.5, the polymerization catalytic activity tends to increase. When the molar ratio of "iodine atom contained in component (c) " to "component (a) " is not more than 3.0, no catalyst poisoning tends to occur.

In addition to the components (a) to (c), the catalyst preferably contains at least one compound selected from the group consisting of conjugated diene compounds and non-conjugated diene compounds, if necessary, in an amount of 1000 mol or less, more preferably 3 to 1000 mol, still more preferably 5 to 300 mol per mol of the component (a). The catalyst containing at least one compound selected from the group consisting of conjugated diene compounds and non-conjugated diene compounds has much improved catalytic activity and is thus preferred. Examples of conjugated diene compounds that can be used include 1,3-butadiene and isoprene, which may also be used as monomers for polymerization as described later. Examples of non-conjugated diene compounds include divinylbenzene, diisopropenylbenzene, triisopropenylbenzene, 1,4-vinylhexadiene, and ethylidene norbornene.

The catalyst composition mainly containing a mixture of components (a) to (c) may be prepared, for example, by reacting the components (a) to (c) dissolved in a solvent and optionally at least one compound selected from the group consisting of conjugated diene compounds and non-conjugated diene compounds. The components may be added in any order in the preparation. However, in order to improve polymerization activity and reduce the induction

period for initiation of polymerization, it is preferred that the components be previously mixed, reacted, and aged. The aging temperature is preferably 0 to 100°C, more preferably 20 to 80°C. Aging at not lower than 0°C tends to be sufficient, while aging at not higher than 100°C tends not to easily result in reduced catalytic activity or wider molecular weight distribution. The aging time is not particularly critical. Moreover, the components may be brought into contact with each other in a production line before being added to a polymerization reaction vessel. In this case, an aging time of at least 0.5 minutes is sufficient. The prepared catalyst will be stable for several days.

The conjugated diene polymer to be used for preparing the modified conjugated diene polymer preferably has a ratio of the weight average molecular weight (Mw) to the number average molecular weight (Mn) measured by gel permeation chromatography, i.e., a molecular weight distribution (Mw/Mn), of 3.5 or less, more preferably 3.0 or less, still more preferably 2.5 or less. A molecular weight distribution of not more than 3.5 tends to lead to improved rubber physical properties such as tensile properties and fuel economy. Moreover, the lower limit of the molecular weight distribution is not particularly critical. Herein, the term "molecular weight distribution (Mw/Mn) " refers to a value calculated as the ratio of weight average molecular weight to number average molecular weight (weight average molecular weight/number average molecular weight) . The weight average molecular weight of the conjugated diene polymer is measured by gel permeation chromatography (GPC) calibrated with polystyrene standards. The number average molecular weight of the conjugated diene polymer is measured by GPC calibrated with polystyrene standards.

The vinyl content and cis-1,4 bond content of the conjugated diene polymer may be easily controlled by adjusting the polymerization temperature. The Mw/Mn may be easily controlled by adjusting the molar ratio of the components (a) to (c).

The conjugated diene polymer preferably has a Mooney viscosity at 100°C ($ML_{1+4}$, 100°C) within a range of 5 to 50, more preferably 10 to 40. A Mooney viscosity of not less than 5 tends to lead to improved properties such as mechanical properties after vulcanization and abrasion resistance, while a Mooney viscosity of not more than 50 tends to lead to improved processability during the kneading of the modified conjugated diene polymer after the modification reaction. The Mooney viscosity may be easily controlled by adjusting the molar ratio of the components (a) to (c).

The Mooney viscosity ($ML_{1+4}$, 100°C) of the conjugated diene polymer is measured as described later in EXAMPLES.

The conjugated diene polymer also preferably has a 1,2-vinyl bond content (1,2-vinyl content) of 0.5% by mass or lower, more preferably 0.4% by mass or lower, still more preferably 0.3% by mass or lower. A 1,2-vinyl bond content of not higher than 0.5% by mass tends to lead to improved rubber physical properties such as tensile properties. The 1,2-vinyl bond content of the conjugated diene polymer is also preferably 0.001% by mass or higher, more preferably 0.01% by mass or higher. Herein, the 1,2-vinyl bond content of the conjugated diene polymer is calculated from signal intensities measured by NMR analysis.

The alkoxysilane compound used in the modification step (A) (hereinafter, also referred to as "modifier") has two or more reactive groups, including an alkoxysilyl group. The type of reactive group other than the alkoxysilyl group is not particularly limited and is preferably, for example, at least one functional group selected from the group consisting of (f) an epoxy group, (g) an isocyanate group, (h) a carbonyl group, and (i) a cyano group. Thus, in another suitable embodiment of the present invention, the alkoxysilane compound contains at least one functional group selected from the group consisting of (f) an epoxy group, (g) an isocyanate group, (h) a carbonyl group, and (i) a cyano group. The alkoxysilane compound may be in the form of a partial condensate or a mixture of the alkoxysilane compound and the partial condensate.

The term "partial condensate" refers to an alkoxysilane compound in which some (i.e. not all) of SiOR (wherein OR represents an alkoxy group) groups are joined by condensation to form SiOSi bond(s). The conjugated diene polymer to be used in the modification reaction preferably has at least 10% living polymer chains.

Specific suitable examples of the alkoxysilane compound that contains (f) an epoxy group (hereinafter, also referred to as "epoxy group-containing alkoxysilane compound") include 2-glycidoxyethyltrimethoxysilane, 2-glycidoxyethyltriethoxysilane, (2-glycidoxyethyl)methyldimethoxysilane, 3-glycidoxypropyltrimethoxysilane, 3-glycidoxypropyltriethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, and 2-(3,4-epoxycyclohexyl)ethyl(methyl)dimethoxysilane. More preferred among these is 3-glycidoxypropyltrimethoxysilane or 2-(3,4-epoxycyclohexyl)ethyltrimethoxysilane.

Moreover, examples of the alkoxysilane compound that contains (g) an isocyanate group (hereinafter, also referred to as "isocyanate group-containing alkoxysilane compound") include 3-isocyanatopropyltrimethoxysilane, 3-isocyanatopropyltriethoxysilane, 3-isocyanatopropylmethyldiethoxysilane, and 3-isocyanatopropyltriisopropoxysilane. Particularly preferred among these is 3-isocyanatopropyltrimethoxysilane.

Moreover, examples of the alkoxysilane compound that contains (h) a carbonyl group (hereinafter, also referred to as "carbonyl group-containing alkoxysilane compound") include 3-methacryloyloxypropyltriethoxysilane, 3-methacryloyloxypropyltrimethoxysilane, 3-methacryloyloxypropylmethyldiethoxysilane, and 3-methacryloyloxypropyltriisopropoxysilane. Particularly preferred among these is 3-methacryloyloxypropyltrimethoxysilane.

Furthermore, examples of the alkoxysilane compound that contains (i) a cyano group (hereinafter, also referred

to as "cyano group-containing alkoxysilane compound") include 3-cyanopropyltriethoxysilane, 3-cyanopropyltrimethoxysilane, 3-cyanopropylmethyldiethoxysilane, and 3-cyanopropyltriisopropoxysilane. Particularly preferred among these is 3-cyanopropyltrimethoxysilane.

Among these modifiers, 3-glycidoxypropyltrimethoxysilane, 2-(3,4-epoxycyclohexyl)ethyltrimethoxysilane, 3-isocyanatopropyltrimethoxysilane, 3-methacryloyloxypropyltrimethoxysilane, and 3-cyanopropyltrimethoxysilane are particularly preferred, with 3-glycidoxypropyltrimethoxysilane being most preferred.

These modifiers may be used alone or in combinations of two or more. Partial condensates of the alkoxysilane compounds may also be used.

The amount of the alkoxysilane compound used in the modification reaction in the modification step (A) is preferably 0.01 to 200 mol, more preferably 0.1 to 150 mol per mol of the component (a). An amount of not less than 0.01 mol tends to allow the modification reaction to proceed sufficiently to improve dispersibility of fillers sufficiently, resulting in sufficient mechanical properties after vulcanization, abrasion resistance, and fuel economy. Also, an amount of not more than 200 mol tends not to allow the modification reaction to be saturated, and thus tends not to add unnecessary cost. The modifier may be added in any manner, such as all at once, in portions, or continuously. Preferably, it is added all at once.

The modification reaction is preferably performed in a solution. The solution used in the polymerization which contains unreacted monomers may be directly used as this solution. Moreover, the modification reaction may be carried out in any manner, such as using a batch reactor or continuously using a multistage continuous reactor, inline mixer, or other devices. Moreover, the modification reaction is preferably performed after completion of the polymerization reaction and before solvent removal, water treatment, heat treatment, the procedures necessary for polymer separation, and other operations.

The temperature of the modification reaction may be the same as the polymerization temperature during the polymerization of the conjugated diene polymer. Specifically, it is preferably 20 to 100°C, more preferably 30 to 90°C. A temperature of not lower than 20°C tends to result in a decrease in the viscosity of the polymer. A temperature of not higher than 100°C tends not to deactivate the polymerization active terminal.

The reaction time in the modification reaction is preferably five minutes to five hours, more preferably 15 minutes to one hour. In the condensation step (B), after the introduction of the alkoxysilane compound residue into the active terminal of the polymer, known antioxidants or reaction terminators may be added if necessary.

In the modification step (A), it is preferred to add, in addition to the modifier, an agent which can be consumed by a condensation reaction with the alkoxysilane compound residue, i.e. the modifier introduced into the active terminal, in the condensation step (B). Specifically, it is preferred to add a functional group-introducing agent. The use of a functional group-introducing agent improves the abrasion resistance of the modified conjugated diene polymer.

The functional group-introducing agent may be any compound that substantially does not directly react with the active terminal but remains unreacted in the reaction system. For example, the functional group-introducing agent is preferably an alkoxysilane compound that is different from the alkoxysilane compound used as the modifier, i.e., an alkoxysilane compound that contains at least one functional group selected from the group consisting of (j) an amino group, (k) an imino group, and (1) a mercapto group. The alkoxysilane compound used as the functional group-introducing agent may be in the form of a partial condensate or a mixture of the partial condensate and the alkoxysilane compound used as the functional group-introducing agent which is not a partial condensate.

Specific examples of the functional group-introducing agent that is an alkoxysilane compound containing (j) an amino group (hereinafter, also referred to as "amino group-containing alkoxysilane compound") include 3-dimethylaminopropyl(triethoxy)silane, 3-dimethylaminopropyl(trimethoxy)silane, 3-diethylaminopropyl(triethoxy)silane, 3-diethylaminopropyl(trimethoxy)silane, 2-dimethylaminoethyl(triethoxy)silane, 2-dimethylaminoethyl(trimethoxy)silane, 3-dimethylaminopropyl(diethoxy)methylsilane, 3-dibutylaminopropyl(triethoxy)silane, 3-aminopropyltrimethoxysilane, 3-aminopropyltriethoxysilane, aminophenyltrimethoxysilane, aminophenyltriethoxysilane, 3-(N-methylamino)propyltrimethoxysilane, 3-(N-methylamino)propyltriethoxysilane, 3-(1-pyrrolidinyl)propyl(triethoxy)silane, and 3-(1-pyrrolidinyl)propyl(trimethoxy)silane; N-(1,3-dimethylbutylidene)-3-(triethoxysilyl)-1-propaneamine, N-(1-methylethylidene)-3-(triethoxysilyl)-1-propaneamine, N-ethylidene-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, and N-(cyclohexylidene)-3-(triethoxysilyl)-1-propaneamine, and trimethoxysilyl, methyldiethoxysilyl, ethyldiethoxysilyl, methyldimethoxysilyl, or ethyldimethoxysilyl compounds corresponding to the foregoing triethoxysilyl compounds. Particularly preferred among these are 3-diethylaminopropyl(triethoxy)silane, 3-dimethylaminopropyl(triethoxy)silane, 3-aminopropyltriethoxysilane, N-(1-methylpropylidene)-3-(triethoxysilyl)-1-propaneamine, and N-(1,3-dimethylbutylidene)-3-(triethoxysilyl)-1-propaneamine.

Moreover, suitable examples of the alkoxysilane compound containing (k) an imino group (hereinafter, also referred to as "imino group-containing alkoxysilane compound") include 3-(1-hexamethyleneimino)propyl(triethoxy)silane, 3-(1-hexamethyleneimino)propyl(trimethoxy)silane, (1-hexamethyleneimino)methyl(trimethoxy)silane, (1-hexamethyleneimino)methyl(triethoxy)silane, 2-(1-hexamethyleneimino)ethyl(triethoxy)silane, 2-(1-hexamethyleneimino)ethyl(trimethoxy)silane, 3-(1-heptamethyleneimino)propyl(triethoxy)silane, 3-(1-dodecamethyleneimino)propyl(triethoxy)silane, 3-(1-hexamethyleneimino)propyl(diethoxy)methylsilane, and 3-(1-hexamethyleneimino)propyl(diethoxy)ethylsilane; and 1-[3-(triethoxysilyl)propyl]-4,5-dihydroimidazole, 1-[3-(trimethoxysilyl)propyl]-4,5-dihydroimidazole, 3-[10-(triethoxysilyl)decyl]-4-oxazoline, N-(3-isopropoxysilylpropyl)-4,5-dihydroimidazole, and N-(3-methyldiethoxysilylpropyl)-4,5-dihydroimidazole. More preferred among these are 3-(1-hexamethyleneimino)propyl(triethoxy)silane, 3-(1-hexamethyleneimino)propyl(trimethoxy)silane, (1-hexamethyleneimino)methyl(trimethoxy)silane, 1-[3-(triethoxysilyl)propyl]-4,5-dihydroimidazole, 1-[3-(trimethoxysilyl)propyl]-4,5-dihydroimidazole, and N-(3-triethoxysilylpropyl]-4,5-dihydroimidazole.

Moreover, examples of the alkoxysilane compound containing (1) a mercapto group (hereinafter, also referred to as "mercapto group-containing alkoxysilane compound") include 3-mercaptopropyltriethoxysilane, 3-mercaptopropyltrimethoxysilane, 2-mercaptoethyltriethoxysilane, 2-mercaptoethyltrimethoxysilane, 3-mercaptopropyl(diethoxy)methylsilane, 3-mercaptopropyl(monoethoxy)dimethylsilane, mercaptophenyltrimethoxysilane, and mercaptophenyltriethoxysilane. Particularly preferred among these is 3-mercaptopropyltriethoxysilane.

Among the above-mentioned functional group-introducing agents, 3-diethylaminopropyl(triethoxy)silane, 3-dimethylaminopropyl(triethoxy)silane, 3-aminopropyltriethoxysilane, 3-(1-hexamethyleneimino)propyl(triethoxy)silane, N-(1-methylpropylidene)-3-(triethoxysilyl)-1-propaneamine, N-(1,3-dimethylbutylidene)-3-(triethoxysilyl)-1-propaneamine, 3-(1-hexamethyleneimino)propyl(trimethoxy)silane, (1-hexamethyleneimino)methyl(trimethoxy)silane, 1-[3-(triethoxysilyl)propyl]-4,5-dihydroimidazole, 1-[3-(trimethoxysilyl)propyl]-4,5-dihydroimidazole, N-[3-(triethoxysilylpropyl]-4,5-dihydroimidazole, and 3-mercaptopropyltriethoxysilane are particularly preferred, with 3-aminopropyltriethoxysilane being most preferred.

These functional group-introducing agents may be used alone or in combinations of two or more.

The amount of the alkoxysilane compound used as the functional group-introducing agent per mol of the component (a) is preferably 0.01 to 200 mol, more preferably 0.1 to 150 mol. An amount of not less than 0.01 mol tends to allow the condensation reaction to proceed sufficiently to improve dispersibility of fillers sufficiently, resulting in excellent mechanical properties after vulcanization, abrasion resistance, and fuel economy. Also, an amount of not more than 200 mol tends not to allow the condensation reaction to be saturated, and thus tends not to add unnecessary cost.

The functional group-introducing agent is preferably added after the introduction of the alkoxysilane compound residue into the active terminal of the conjugated diene polymer in the modification step (A) and before the start of the condensation reaction in the condensation step (B). If added after the start of the condensation reaction, the functional group-introducing agent may not uniformly disperse, resulting in reduced catalytic performance. Specifically, the functional group-introducing agent is preferably added five minutes to five hours after the start of the modification reaction, more preferably 15 minutes to one hour after the start of the modification reaction.

When the functional group-containing alkoxysilane compound is used as the functional group-introducing agent, a modification reaction occurs between the conjugated diene polymer containing an active terminal and a substantially stoichiometric amount of the modifier added to the reaction system, thereby introducing the alkoxysilyl group into substantially all active terminals; further, the functional group-introducing agent is added, whereby the alkoxysilane compound residues are introduced in an amount more than the equivalent amount of the active terminal of the conjugated diene polymer.

In view of reaction efficiency, the condensation reaction between alkoxysilyl groups preferably occurs between a free alkoxysilane compound and the alkoxysilyl group present at the end of the conjugated diene polymer, or optionally between the alkoxysilyl groups at the ends of the conjugated diene polymers. It is not preferred to perform a reaction between free alkoxysilane compounds. Thus, when an alkoxysilane compound is further added as a functional group-introducing agent, its alkoxysilyl group preferably has lower hydrolyzability than the alkoxysilyl group introduced into the end of the conjugated diene polymer.

For example, it is preferred to combine a compound containing a trimethoxysilyl group with high hydrolyzability as the alkoxysilane compound to be reacted with the active terminal of the conjugated diene polymer with a compound containing an alkoxysilyl group (e.g. a triethoxysilyl group) with lower hydrolyzability than the trimethoxysilyl group-containing compound as the alkoxysilane compound to be further added as a functional group-introducing agent.

The condensation step (B) includes performing a condensation reaction of the residual group of the alkoxysilane compound introduced into the active terminal, in the presence of a condensation catalyst containing at least one element selected from the group consisting of the elements of Groups 4, 12, 13, 14, and 15 of the periodic table.

The condensation catalyst may be any catalyst that contains at least one element selected from the group consisting of the elements of Groups 4, 12, 13, 14, and 15 of the periodic table. Preferably, for example, the condensation catalyst contains at least one element selected from the group consisting of titanium (Ti) (Group 4), tin (Sn) (Group 14), zirconium (Zr) (Group 4), bismuth (Bi) (Group 15), and aluminum (Al) (Group 13) .

Specific examples of the condensation catalyst that contains tin (Sn) include bis(n-octanoato)tin, bis(2-ethylhexanoato)tin, bis(laurato)tin, bis(naphthenato)tin, bis(stearato)tin, bis(oleato)tin, dibutyltin diacetate, dibutyltin di-n-octanoate, dibutyltin di-2-ethylhexanoate, dibutyltin dilaurate, dibutyltin maleate, dibutyltin bis(benzylmaleate), dibutyltin

bis(2-ethylhexylmaleate), di-n-octyltin diacetate, di-n-octyltin di-n-octanoate, di-n-octyltin di-2-ethylhexanoate, di-n-octyltin dilaurate, di-n-octyltin maleate, di-n-octyltin bis(benzylmaleate), and di-n-octyltin bis(2-ethylhexylmaleate) .

Examples of the condensation catalyst that contains zirconium (Zr) include tetraethoxyzirconium, tetra-n-propoxyzirconium, tetra-i-propoxyzirconium, tetra-n-butoxyzirconium, tetra-sec-butoxyzirconium, tetra-tert-butoxyzirconium, tetra(2-ethylhexyl oxide)zirconium, zirconium tributoxystearate, zirconium tributoxyacetylacetonate, zirconium dibutoxy bis(acetylacetonate), zirconium tributoxyethylacetoacetate, zirconium butoxyacetylacetonate bis(ethylacetoacetate), zirconium tetrakis(acetylacetonate), zirconium diacetylacetonate bis(ethylacetoacetate), bis(2-ethylhexanoate)zirconium oxide, bis(laurate)zirconium oxide, bis(naphthenate)zirconium oxide, bis(stearate)zirconium oxide, bis(oleate)zirconium oxide, bis(linoleate)zirconium oxide, tetrakis(2-ethylhexanoato)zirconium, tetrakis(laurato)zirconium, tetrakis(naphthenato)zirconium, tetrakis(stearato)zirconium, tetrakis(oleato)zirconium, and tetrakis(linoleato)zirconium.

Examples of the condensation catalyst that contains bismuth (Bi) include tris(2-ethylhexanoato)bismuth, tris(laurato)bismuth, tris(naphthenato)bismuth, tris(stearato)bismuth, tris(oleato)bismuth, and tris(linoleato)bismuth.

Examples of the condensation catalyst that contains aluminum (Al) include triethoxyaluminum, tri-n-propoxyaluminum, tri-i-propoxyaluminum, tri-n-butoxyaluminum, tri-sec-butoxyaluminum, tri-tert-butoxyaluminum, tri(2-ethylhexyl oxide)aluminum, aluminum dibutoxystearate, aluminum dibutoxyacetylacetonate, aluminum butoxy bis(acetylacetonate), aluminum dibutoxyethylacetoacetate, aluminum tris(acetylacetonate), aluminum tris(ethylacetoacetate), tris(2-ethylhexanoato)aluminum, tris(laurato)aluminum, tris(naphthenato)aluminum, tris(stearato)aluminum, tris(oleato)aluminum, and tris(linoleato)aluminum.

Examples of the condensation catalyst that contains titanium (Ti) include tetramethoxytitanium, tetraethoxytitanium, tetra-n-propoxytitanium, tetra-i-propoxytitanium, tetra-n-butoxytitanium, tetra-n-butoxytitanium oligomer, tetra-sec-butoxytitanium, tetra-tert-butoxytitanium, tetra(2-ethylhexyl oxide)titanium, bis(octane dioleate)bis(2-ethylhexyl oxide)titanium, tetra(octane dioleato)titanium, titanium lactate, titanium dipropoxy bis(triethanolaminate), titanium dibutoxy bis(triethanolaminate), titanium tributoxystearate, titanium tripropoxystearate, titanium tripropoxyacetylacetonate, titanium dipropoxy bis(acetylacetonate), titanium tripropoxyethylacetoacetate, titanium propoxyacetylacetonate bis(ethylacetoacetate), titanium tributoxyacetylacetonate, titanium dibutoxy bis(acetylacetonate), titanium tributoxyethylacetoacetate, titanium butoxyacetylacetonate bis(ethylacetoacetate), titanium tetrakis(acetylacetonate), titanium diacetylacetonate bis(ethylacetoacetate), bis(2-ethylhexanoate)titanium oxide, bis(laurate)titanium oxide, bis(naphthenate)titanium oxide, bis(stearate)titanium oxide, bis(oleate)titanium oxide, bis(linoleate)titanium oxide, tetrakis(2-ethylhexanoato)titanium, tetrakis(laurato)titanium, tetrakis(naphthenato)titanium, tetrakis(stearato)titanium, tetrakis(oleato)titanium, and tetrakis(linoleato)titanium.

Among the above-mentioned condensation catalysts, titanium (Ti)-containing condensation catalysts are more preferred. Among the titanium (Ti)-containing condensation catalysts, alkoxides, carboxylates, and acetylacetonate complex salts of titanium (Ti) are still more preferred, with tetra-i-propoxytitanium (tetraisopropyl titanate) being particularly preferred. The use of a titanium (Ti)-containing condensation catalyst can more effectively promote the condensation reaction between the residue of the alkoxysilane compound used as the modifier and the residue of the alkoxysilane compound used as the functional group-introducing agent to produce a modified conjugated diene polymer having excellent processability, low-temperature properties, and abrasion resistance. Thus, in another suitable embodiment of the present invention, the condensation catalyst contains titanium (Ti).

As to the amount of the condensation catalyst, the number of moles of the above-mentioned compounds that may be used as the condensation catalyst is preferably 0.1 to 10 mol, particularly preferably 0.3 to 5 mol per mole of the total alkoxysilyl groups in the reaction system. An amount of not less than 0.1 mol tends to allow the condensation reaction to sufficiently proceed, while an amount of not more than 10 mol tends not to allow the effect of the condensation catalyst to be saturated, and thus tends not to add unnecessary cost.

The condensation catalyst may be added before the modification reaction, but is preferably added after the modification reaction and before the start of the condensation reaction. When the condensation catalyst is added after the modification reaction, it tends not to directly react with the active terminal and instead, an alkoxysilyl group tends to be introduced into the active terminal. Also, when the condensation catalyst is added before the start of the condensation reaction, it tends to uniformly disperse to improve catalytic performance. Specifically, the condensation catalyst is preferably added five minutes to five hours after the start of the modification reaction, more preferably 15 minutes to one hour after the start of the modification reaction.

The condensation reaction in the condensation step (B) is preferably performed in an aqueous solution. The temperature during the condensation reaction is preferably 85 to 180°C, more preferably 100 to 170°C, particularly preferably 110 to 150°C. A condensation reaction temperature of not lower than 85°C tends to allow the condensation reaction to proceed sufficiently to complete the condensation reaction. In this case, the resulting modified conjugated diene polymer tends not to undergo changes over time, resulting in no quality problem. Also, a condensation reaction temperature of not higher than 180°C tends not to cause an aging reaction of the polymer, resulting in improved physical properties.

The condensation reaction is preferably performed in an aqueous solution with a pH of 9 to 14, more preferably

10 to 12. When the aqueous solution has a pH in the above-mentioned range, the condensation reaction can be promoted to improve the temporal stability of the modified conjugated diene polymer. A pH of not lower than 9 tends to allow the condensation reaction to proceed sufficiently to complete the condensation reaction. In this case, the resulting modified conjugated diene polymer tends not to undergo changes over time, resulting in no quality problem. Moreover, when the condensation reaction is performed in an aqueous solution with a pH of not higher than 14, the separated modified conjugated diene polymer tends not to contain a large amount of alkali-derived residues, resulting in no difficulty in removing such residues.

The reaction time in the condensation reaction is preferably five minutes to 10 hours, more preferably about 15 minutes to five hours. A reaction time of not less than five minutes tends to complete the condensation reaction, while a reaction time of not more than 10 hours tends not to allow the condensation reaction to be saturated. Moreover, the pressure in the reaction system during the condensation reaction is preferably 0.01 to 20 MPa, more preferably 0.05 to 10 MPa.

The condensation reaction may be carried out in any manner, such as using a batch reactor or continuously using, for example, a multistage continuous reactor. Moreover, solvent removal may be performed simultaneously with the condensation reaction.

After the condensation reaction is performed as described above, a conventional post treatment may be performed to obtain a target modified conjugated diene polymer.

The modified conjugated diene polymer preferably has a Mooney viscosity ($ML_{1+4}$, 125°C) of 10 to 150, more preferably 20 to 100. A Mooney viscosity ($ML_{1+4}$, 125°C) of not less than 10 tends to lead to improved rubber physical properties such as tensile properties, while a Mooney viscosity ($ML_{1+4}$, 125°C) of not more than 150 tends not to provide poor workability, resulting in easy kneading with compounding agents.

The Mooney viscosity ($ML_{1+4}$, 125°C) of the modified conjugated diene polymer is measured as described later in EXAMPLES.

The modified conjugated diene polymer preferably has a molecular weight distribution (Mw/Mn) of 3.5 or less, more preferably 3.0 or less, still more preferably 2.5 or less. A molecular weight distribution of not more than 3.5 tends to lead to improved rubber physical properties such as tensile properties and fuel economy. The weight average molecular weight (Mw) of the modified conjugated diene polymer is measured by gel permeation chromatography (GPC) calibrated with polystyrene standards. The number average molecular weight (Mn) of the modified conjugated diene polymer is measured by GPC calibrated with polystyrene standards.

The modified conjugated diene polymer preferably has a cold flow value (mg/min) of 1.0 or lower, more preferably 0.8 or lower. The polymer having a cold flow value of not higher than 1.0 tends to have improved shape stability during storage. Herein, the cold flow value (mg/min) of the modified conjugated diene polymer is determined as described later.

The modified conjugated diene polymer preferably has a temporal stability rating of 0 to 5, more preferably 0 to 2. The polymer having a rating of not higher than 5 tends not to change over time during storage. Herein, the temporal stability of the modified conjugated diene polymer is determined as described later.

The modified conjugated diene polymer preferably has a glass transition temperature of -40°C or lower, more preferably -43°C or lower, still more preferably -46°C or lower, particularly preferably -50°C or lower. When the glass transition temperature is not higher than -40°C, the low-temperature properties desired for cold weather tires tend to be sufficiently ensured. Moreover, the lower limit of the glass transition temperature is not particularly critical.

The glass transition temperature of the modified conjugated diene polymer may be measured as described later in EXAMPLES.

The amount of the modified polymer based on 100% by mass of the rubber component is preferably 5% by mass or more, more preferably 10% by mass or more, still more preferably 15% by mass or more. When the amount is not less than 5% by mass, good abrasion resistance tends to be obtained. The amount is also preferably 60% by mass or less, more preferably 50% by mass or less, still more preferably 40% by mass or less, particularly preferably 30% by mass or less. When the amount is not more than 60% by mass, good wet grip performance tends to be obtained.

The rubber component may suitably include an isoprene-based rubber in combination with the copolymer. The incorporation of an isoprene-based rubber improves rubber strength and abrasion resistance, and further allows the rubber compound to come together more easily during kneading, thereby improving productivity.

Examples of the isoprene-based rubber include natural rubber (NR) and polyisoprene rubber (IR). Any NR may be used including those generally used in the tire industry, such as SIR20, RSS#3, TSR20, deproteinized natural rubber (DPNR), highly purified natural rubber (UPNR), and epoxidized natural rubber (ENR). Likewise, the IR may be any IR generally used in the tire industry. These isoprene-based rubbers may be used alone or in combinations of two or more.

The amount of the isoprene-based rubber based on 100% by mass of the rubber component is preferably 30% by mass or more, more preferably 40% by mass or more, still more preferably 50% by mass or more. An amount of not less than 30% by mass tends to provide good rubber strength and good abrasion resistance and to allow the rubber compound to come together easily during kneading, resulting in good productivity. Also, the amount of the isoprene-based rubber is 99% by mass or less, preferably 90% by mass or less, more preferably 80% by mass or less, still more

preferably 70% by mass or less. An amount of not more than 99% by mass tends to lead to sufficient wet grip performance.

The amount of the isoprene-based rubber refers to the combined amount of modified and unmodified isoprene-based rubbers.

Examples of rubbers other than the isoprene-based rubber which may be included in the rubber component include conventional styrene-butadiene rubbers (SBR), polybutadiene rubbers (BR), butadiene-isoprene rubbers, and butyl rubbers. Other examples include ethylene-propylene copolymers and ethylene-octene copolymers. These rubbers may be used alone or in combinations of two or more. Among these, BR is preferred because it allows for a balanced improvement of abrasion resistance, wet grip performance, and fuel economy.

Any BR may be used including those generally used in the tire industry, such as high-cis content BR and BR containing syndiotactic polybutadiene crystals. These types of BR may be used alone or in combinations of two or more.

The amount of the BR based on 100% by mass of the rubber component is preferably 5% by mass or more, more preferably 10% by mass or more, still more preferably 15% by mass or more. When the amount is not less than 5% by mass, good abrasion resistance tends to be obtained. The amount of the BR is also preferably 60% by mass or less, more preferably 50% by mass or less, still more preferably 40% by mass or less, particularly preferably 30% by mass or less. When the amount is not more than 60% by mass, good wet grip performance tends to be obtained.

The amount of the BR refers to the combined amount of modified and unmodified polybutadiene rubbers.

The rubber composition of the present invention contains a silica having a nitrogen adsorption specific surface area ($N_2SA$) of 40 $m^2/g$ or more.

Non-limiting examples of the silica include dry silica (anhydrous silica) and wet silica (hydrous silica) . Wet silica is preferred because it has a large number of silanol groups. These types of silica may be used alone or in combinations of two or more.

The silica has a nitrogen adsorption specific surface area ($N_2SA$) of 40 $m^2/g$ or more, preferably 60 $m^2/g$ or more, more preferably 80 $m^2/g$ or more, still more preferably 160 $m^2/g$ or more. The silica having a $N_2SA$ of not less than 40 $m^2/g$ tends to have a large reinforcing effect, thereby resulting in excellent abrasion resistance and excellent rubber strength. The use of the silica having a $N_2SA$ of not less than 160 $m^2/g$ together with the copolymer can synergistically increase the effects of improving properties. The $N_2SA$ of the silica is also preferably 600 $m^2/g$ or less, more preferably 300 $m^2/g$ or less, still more preferably 200 $m^2/g$ or less. The silica having a $N_2SA$ of not more than 600 $m^2/g$ tends to readily disperse, thereby resulting in good fuel economy and good processability.

The $N_2SA$ of the silica is measured by the BET method in accordance with ASTM D3037-93.

The amount of the silica per 100 parts by mass of the rubber component is 10 parts by mass or more, preferably 15 parts by mass or more, more preferably 20 parts by mass or more, still more preferably 70 parts by mass or more, particularly preferably 90 parts by mass or more, most preferably 120 parts by mass or more. When the amount is not less than 10 parts by mass, the added silica tends to produce its effect, resulting in excellent abrasion resistance and excellent rubber strength. The use of 90 parts by mass or more of the silica together with the copolymer can synergistically increase the effects of improving properties. The amount of the silica is also preferably 250 parts by mass or less, more preferably 200 parts by mass or less. When the amount is not more than 250 parts by mass, good processability tends to be obtained.

The rubber composition of the present invention preferably contains a silane coupling agent.

The silane coupling agent may be any silane coupling agent conventionally used in combination with silica in the rubber industry. Examples include sulfide silane coupling agents such as bis(3-triethoxysilylpropyl)tetrasulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. Among these, the silane coupling agent is preferably a mercapto silane coupling agent because its use together with the copolymer can synergistically increase the effects of improving properties.

The mercapto silane coupling agent may suitably be a silane coupling agent represented by the formula (2-1) below and/or a silane coupling agent containing linking units A and B represented by the formulas (2-2) and (2-3), respectively, below.

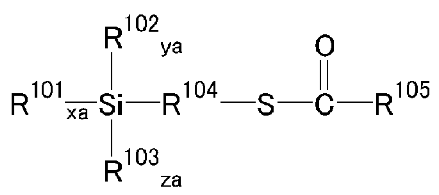

(2-1)

In formula (2-1), $R^{101}$ represents a monovalent group selected from -Cl, -Br, $-OR^{106}$, $-O(O=)CR^{106}$, $-ON=CR^{107}$,

$-ON=CR^{106}R^{107}$, $-NR^{106}R^{107}$, or $-(OSiR^{106}R^{107})_h(OSiR^{106}R^{107}R^{108})$ where $R^{106}$, $R^{107}$, and $R^{108}$ may be the same or different and each represent a hydrogen atom or a C1-C18 monovalent hydrocarbon group, and h represents an average number of 1 to 4; $R^{102}$ represents $R^{101}$, a hydrogen atom, or a C1-C18 monovalent hydrocarbon group; $R^{103}$ represents $R^{101}$, $R^{102}$, a hydrogen atom, or the group: $-[O(R^{109}O)_j]_{0.5}-$ where $R^{109}$ represents a C1-C18 alkylene group, and j represents an integer of 1 to 4; $R^{104}$ represents a C1-C18 divalent hydrocarbon group; $R^{105}$ represents a C1-C18 monovalent hydrocarbon group; and xa, ya, and za are numbers satisfying the following relations: $xa + ya + 2za = 3$, $0 \leq xa \leq 3$, $0 \leq ya \leq 2$, and $0 \leq za \leq 1$.

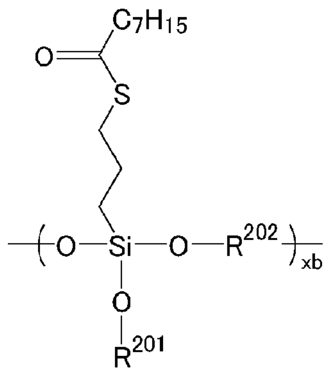

(2-2)

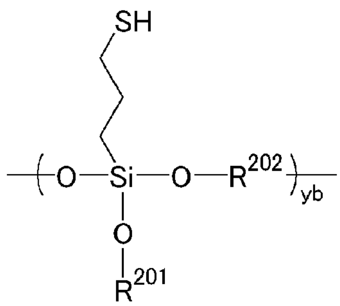

(2-3)

In formulas (2-2) and (2-3), xb represents an integer of 0 or more; yb represents an integer of 1 or more; $R^{201}$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxyl or carboxyl group; and $R^{202}$ represents a branched or unbranched C1-C30 alkylene group, a branched or unbranched C2-C30 alkenylene group, or a branched or unbranched C2-C30 alkynylene group, provided that $R^{201}$ and $R^{202}$ may together form a cyclic structure.

Specific examples of $R^{102}$, $R^{105}$, $R^{106}$, $R^{107}$, and $R^{108}$ in formula (2-1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of linear alkylene groups that may be used as $R^{109}$ in formula (2-1) include a methylene group, an ethylene group, an n-propylene group, an n-butylene group, and a hexylene group. Examples of branched alkylene groups that may be used as $R^{109}$ include an isopropylene group, an isobutylene group, and a 2-methylpropylene group.

Specific examples of the silane coupling agent of formula (2-1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among these, 3-octanoylthiopropyltriethoxysilane (NXT available from Momentive) is particularly preferred in order to simultaneously achieve processability and fuel economy. These silane coupling agents may be used alone or in combinations of two or more.

When the silane coupling agent containing a linking unit A of formula (2-2) and a linking unit B of formula (2-3) is used, the increase in viscosity during processing is reduced as compared to when using polysulfidesilanes such as bis(3-triethoxysilylpropyl)tetrasulfide. This is probably because, since the sulfide moiety of the linking unit A is a C-S-C

bond, the silane coupling agent is thermally more stable than tetrasulfides and disulfides, and thus the Mooney viscosity is less likely to increase.

Moreover, the decrease in scorch time is reduced as compared to when using mercaptosilanes such as 3-mercaptopropyltrimethoxysilane. This is probably because, though the linking unit B has a mercaptosilane structure, the $-C_7H_{15}$ moiety of the linking unit A covers the -SH group of the linking unit B to inhibit it from reacting with the polymer, and therefore scorching is less likely to occur.

In view of processability, the linking unit A content of the silane coupling agent of the above structure is preferably 30 mol% or more, more preferably 50 mol% or more, but is preferably 99 mol% or less, more preferably 90 mol% or less. Moreover, in view of reactivity with silica, the linking unit B content is preferably 1 mol% or more, more preferably 5 mol% or more, still more preferably 10 mol% or more, but is preferably 70 mol% or less, more preferably 65 mol% or less, still more preferably 55 mol% or less. Moreover, the combined content of the linking units A and B is preferably 95 mol% or more, more preferably 98 mol% or more, particularly preferably 100 mol%.

The linking unit A or B content refers to the amount including the linking unit A or B present at the end of the silane coupling agent, if any. In the case where the linking unit A or B is present at the end of the silane coupling agent, its form is not particularly limited as long as it forms a unit corresponding to formula (2-2) representing the linking unit A or formula (2-3) representing the linking unit B.

Examples of the halogen atom for $R^{201}$ include chlorine, bromine, and fluorine.

Examples of the branched or unbranched C1-C30 alkyl group for $R^{201}$ include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group. The alkyl group preferably has 1 to 12 carbon atoms.

Examples of the branched or unbranched C2-C30 alkenyl group for $R^{201}$ include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, and a 1-octenyl group. The alkenyl group preferably has 2 to 12 carbon atoms.

Examples of the branched or unbranched C2-C30 alkynyl group for $R^{201}$ include an ethynyl group, a propynyl group, a butynyl group, a pentynyl group, a hexynyl group, a heptynyl group, an octynyl group, a nonynyl group, a decynyl group, an undecynyl group, and a dodecynyl group. The alkynyl group preferably has 2 to 12 carbon atoms.

Examples of the branched or unbranched C1-C30 alkylene group for $R^{202}$ include an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group. The alkylene group preferably has 1 to 12 carbon atoms.

Examples of the branched or unbranched C2-C30 alkenylene group for $R^{202}$ include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group. The alkenylene group preferably has 2 to 12 carbon atoms.

Examples of the branched or unbranched C2-C30 alkynylene group for $R^{202}$ include an ethynylene group, a propynylene group, a butynylene group, a pentynylene group, a hexynylene group, a heptynylene group, an octynylene group, a nonynylene group, a decynylene group, an undecynylene group, and a dodecynylene group. The alkynylene group preferably has 2 to 12 carbon atoms.

In the silane coupling agent containing a linking unit A of formula (2-2) and a linking unit B of formula (2-3), the total number of repetitions (xb + yb) consisting of the sum of the number of repetitions (xb) of the linking unit A and the number of repetitions (yb) of the linking unit B is preferably in the range of 3 to 300. When the total number of repetitions is within the above-mentioned range, the $-C_7H_{15}$ moiety of the linking unit A covers the mercaptosilane of the linking unit B to reduce the decrease in scorch time while ensuring good reactivity with silica and the rubber component.

Examples of the silane coupling agent containing a linking unit A of formula (2-2) and a linking unit B of formula (2-3) include NXT-Z30, NXT-Z45, and NXT-Z60 all available from Momentive. These silane coupling agents may be used alone or in combinations of two or more.

The amount of the silane coupling agent per 100 parts by mass of the silica is preferably 0.5 parts by mass or more, more preferably 1 part by mass or more, still more preferably 3 parts by mass or more. When the amount is not less than 0.5 parts by mass, the silane coupling agent tends to have a sufficient coupling effect and also to allow white fillers to highly disperse. Thus, rubber tensile strength tends to be improved. The amount of the silane coupling agent per 100 parts by mass of the silica is also preferably 15 parts by mass or less, more preferably 12 parts by mass or less, still more preferably 10 parts by mass or less. When the amount is not more than 15 parts by mass, no excess silane coupling agent tends to remain, thus resulting in the rubber composition having improved processability and tensile properties.

The rubber composition of the present invention contains carbon black.

Examples of the carbon black include furnace black (furnace carbon black) such as SAF, ISAF, HAF, MAF,

FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite. These types of carbon black may be used alone or in combinations of two or more.

The carbon black preferably has a nitrogen adsorption specific surface area ($N_2SA$) of 5 $m^2/g$ or more, more preferably 50 $m^2/g$ or more. The carbon black having a $N_2SA$ of not less than 5 $m^2/g$ tends to provide improved reinforcing properties and thus sufficient abrasion resistance. The $N_2SA$ of the carbon black is also preferably 600 $m^2/g$ or less, more preferably 300 $m^2/g$ or less, still more preferably 150 $m^2/g$ or less. The carbon black having a $N_2SA$ of not more than 600 $m^2/g$ tends to disperse better so that the effects of the present invention can be well achieved.

The nitrogen adsorption specific surface area of the carbon black is determined in accordance with JIS K 6217-2:2001.

The carbon black preferably has an oil absorption number of compressed sample (COAN) of 50 mL/100 g or more, more preferably 100 mL/100 g or more, still more preferably 120 mL/100 g or more. The carbon black having a COAN of not less than 50 mL/100 g tends not to have reduced dispersibility and tends to easily ensure sufficient reinforcing properties, resulting in good durability (tensile properties). The use of the carbon black having a COAN of not less than 100 mL/100 g together with the copolymer can synergistically increase the effects of improving properties. The COAN of the carbon black is also preferably 180 mL/100 g or less, more preferably 170 mL/100 g or less, still more preferably 150 mL/100 g or less. The carbon black having a COAN of not more than 180 mL/100 g tends not to excessively increase rubber viscosity and not to provide poor processability, and tends to disperse easily and sufficiently. Moreover, its use together with the copolymer can synergistically increase the effects of improving properties.

Herein, the COAN of the carbon black is determined in accordance with JIS K6217-4. The oil used is dibutyl phthalate.

The carbon black preferably has a volatile matter content at 900°C of 0.5% by mass or less, more preferably 0.46% by mass or less. A volatile matter content of not more than 0.5% by mass tends to lead to sufficiently improved grip performance on dry roads. Moreover, the lower limit of the volatile matter content is not particularly critical.

Herein, the volatile matter content of the carbon black is determined in accordance with JIS K6221 (1994).

The carbon black preferably has a volatile matter content at 1500°C of 1.0% by mass or less, more preferably 0.7% by mass or less. A volatile matter content of not more than 1.0% by mass tends to lead to sufficiently improved grip performance on dry roads. Moreover, the lower limit of the volatile matter content is not particularly critical.

The carbon black preferably has a pH of 6.0 or higher, more preferably 7.0 or higher, still more preferably 8.5 or higher as measured in accordance with JIS K 6220-1. A pH of not lower than 6.0 tends to lead to sufficiently improved grip performance on dry roads. The pH of the carbon black is preferably 12.0 or lower, more preferably 11.0 or lower. A pH of not higher than 12.0 tends not to adversely affect curing (e.g. cure rate, crosslink density).

The carbon black may be produced by conventionally known methods such as furnace process or channel process, and preferably by the furnace process described below.

The furnace process (oil furnace process), as described in, for example, JP 2004-43598 A and JP 2004-277443 A uses an apparatus having a combustion zone where a high-temperature combustion gas stream is generated in a reaction furnace, a reaction zone where a feedstock hydrocarbon is introduced into the high-temperature combustion gas stream to convert the feedstock hydrocarbon into carbon black by pyrolysis, and a quench zone where the reaction gas is rapidly cooled to terminate the reaction. This process may produce various types of carbon black with different properties by controlling conditions such as combustion conditions, the flow rate of high-temperature combustion gas, the conditions for introducing the feedstock oil into the reaction furnace, or the time from the carbon black conversion to the termination of the reaction.

In the combustion zone, air, oxygen, or a mixture thereof as oxygen-containing gas and a gaseous or liquid fuel hydrocarbon may be mixed and combusted to form high-temperature combustion gas. Examples of the fuel hydrocarbon include carbon monoxide, natural gas, coal gas, petroleum gas, petroleum liquid fuels such as heavy oil, and coal liquid fuels such as creosote oil. The combustion is preferably controlled so that the combustion temperature is in the range of 1400°C to 2000°C.

In the reaction zone, a feedstock hydrocarbon may be introduced into the high-temperature combustion gas stream formed in the combustion zone, by spraying from parallel or laterally disposed burners to pyrolyze and convert the feedstock hydrocarbon to carbon black. Preferably, the feedstock oil is introduced through one or more burners into the high-temperature combustion gas stream having a flow rate in the range of 100 to 1,000 m/s. The feedstock oil is preferably divided and introduced through two or more burners. Moreover, the reaction zone is preferably provided with a narrow portion to improve reaction efficiency. The narrow portion preferably has a ratio of the diameter of the narrow portion to the diameter of the part upstream of the narrow portion of 0.1 to 0.8.

Examples of the feedstock hydrocarbon include aromatic hydrocarbons such as anthracene; coal hydrocarbons such as creosote oil; and petroleum heavy oils such as EHE oil (by-product oil from ethylene production) and FCC oil (residual oil from fluid catalytic cracking).

In the quench zone, water spraying or other cooling methods may be performed to cool the high-temperature

reaction gas to 1000 to 800°C or lower. The time from the introduction of the feedstock oil to the termination of the reaction is preferably 2 to 100 milliseconds . After the cooled carbon black is separated and recovered from the gas, it may be subjected to known processes such as pelletization and drying.

The carbon black produced by the furnace process may further be heated at 800 to 2000°C, preferably 900 to 1200°C, with no oxygen flow, i.e. in an oxygen-free atmosphere (for example, in hydrogen or other reducing atmospheres or nitrogen or other inert gas atmospheres) to obtain a carbon black having the above-mentioned properties such as COAN. Before the heat treatment, the carbon black produced by the furnace process may be oxidized using, for example, nitric acid, hydrogen peroxide, ozone, or dichromate. The heat treatment retention time is preferably one to six hours. The functional groups on the surface of the carbon black particles can be partially (especially, carboxyl and hydroxyl groups) evaporated and dissipated by the heat treatment with no oxygen flow. When the heat treatment is carried out so that the volatile matter content at 900°C falls within the range indicated earlier, the surface activity of the carbon black may be moderately reduced to allow the rubber composition to have a sufficiently reduced E* and a sufficiently increased tan $\delta$.

Examples of the carbon black include products of Asahi Carbon Co., Ltd., Cabot Japan K.K., Tokai Carbon Co., Ltd., Mitsubishi Chemical Corporation, Lion Corporation, NSCC Carbon Co., Ltd., and Columbia Carbon.

The amount of the carbon black per 100 parts by mass of the rubber component is preferably 5 parts by mass or more, more preferably 10 parts by mass or more, still more preferably 20 parts by mass or more. When the amount is not less than 5 parts by mass, the carbon black tends to provide sufficient reinforcing properties. The amount is also preferably 60 parts by mass or less, more preferably 50 parts by mass or less, still more preferably 40 parts by mass or less. When the amount is not more than 60 parts by mass, good fuel economy tends to be obtained.

The rubber composition of the present invention preferably contains a tetrazine compound represented by the formula (1) below. Its use together with the copolymer can synergistically increase the effects of improving properties.

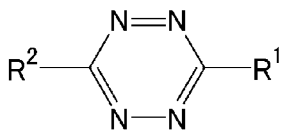

(1)

In formula (1), $R^1$ and $R^2$ may be the same or different and each represent a hydrogen atom (-H), $-COOR^3$ in which $R^3$ represents either a hydrogen atom (-H) or an alkyl group, or a C1-C11 monovalent hydrocarbon group optionally containing a heteroatom, and $R^1$ and $R^2$ may each form a salt.

Examples of the heteroatom include nitrogen, oxygen, and sulfur atoms.

The hydrocarbon group as $R^1$ or $R^2$ has 1 to 11 carbon atoms, preferably 2 to 9 carbon atoms, more preferably 4 to 7 carbon atoms.

$R^1$ and $R^2$ are each preferably $-COOR^3$ or the heteroatom-containing hydrocarbon group because such a tetrazine compound can be expected to interact easily with a reinforcing filler (especially carbon black or silica), and therefore better performance on ice, fuel economy, and abrasion resistance can be obtained. More preferably, $R^1$ and $R^2$ are both the heteroatom-containing hydrocarbon groups.

The hydrocarbon group as $R^1$ or $R^2$ is not particularly limited and is preferably a homocyclic or heterocyclic group because such a tetrazine compound can be expected to interact easily with a reinforcing filler (especially carbon black or silica), and therefore better performance on ice, fuel economy, and abrasion resistance can be obtained. More preferably, at least one of $R^1$ and $R^2$ groups is a heterocyclic group. Still more preferably, $R^1$ and $R^2$ are both heterocyclic groups.

Herein, the term "homocyclic group" refers to a group having a ring structure consisting only of carbon atoms. The term "heterocyclic group" refers to a group having a ring structure consisting of two or more types of elements including a carbon atom.

Examples of the homocyclic group include aryl and cycloalkyl groups. Among these, aryl groups are preferred.

Examples of aryl groups include phenyl and naphthyl groups. Among these, a phenyl group is preferred.

Examples of cycloalkyl groups include cyclopentyl and cyclohexyl groups.

The heterocyclic group is preferably a nitrogen-containing heterocyclic group which contains a nitrogen atom as a ring-forming heteroatom, more preferably a nitrogen-containing heterocyclic group which only contains a nitrogen atom as a ring-forming heteroatom.

Examples of the nitrogen-containing heterocyclic group include aziridinyl, azetidinyl, pyrrolidinyl, piperidinyl, hexamethyleneimino, imidazolidyl, piperazinyl, pyrazolidyl, pyrrolyl, imidazolyl, pyrazolyl, pyridyl, pyridazyl, pyrimidyl, pyrazyl, quinolyl, isoquinolyl, cinnolinyl, quinazolinyl, and phthalazinyl groups. Among these, pyridyl and pyrimidyl groups are preferred, with a pyridyl group being more preferred.

The hydrogen atom in the homocyclic or heterocyclic group may be replaced by a substituent. Preferably, it is

replaced by a substituent because such a tetrazine compound can be expected to interact easily with a reinforcing filler
(especially carbon black or silica), and therefore better performance on ice, fuel economy, and abrasion resistance can be obtained.

Examples of the substituent include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, epoxy, sulfonate, and trifluoromethyl groups. These substituents may be further substituted by the above-listed substituents and may contain groups other than the above substituents, such as an alkylene group or an alkyl group. In order to more suitably achieve the effects of the present invention, the substituent is preferably a carboxyl group, the above-described $-COOR^3$, an amino group (preferably a group represented by the formula (A) or (B) below), an alkoxy group (preferably a C1-C6 alkoxy group), or an alkoxysilyl group (preferably a C1-C6 alkoxysilyl group), among others.

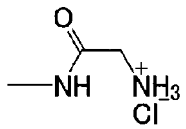

(A)

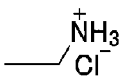

(B)

The substituent may form a salt, as in the case of the group of formula (A) or (B). Examples of salts that may be formed include salts of an amino group with a halogen atom, salts of a carboxyl group with a monovalent metal such as Na or K, and salts of a sulfonate group with the monovalent metal.

$R^3$ in the group $-COOR^3$ represents a hydrogen atom or an alkyl group. The alkyl group preferably has 1 to 8 carbon atoms, more preferably 1 to 3 carbon atoms.

Examples of the alkyl group include methyl, ethyl, n-propyl, isopropyl, n-butyl, sec-butyl, and tert-butyl groups.

$R^3$ is preferably an alkyl group.

The tetrazine compound of formula (1) may be any tetrazine compound that can react with a diene rubber. The tetrazine compounds may be used alone or in combinations of two or more. In order to more suitably achieve the effects of the present invention, the tetrazine compound is preferably a compound represented by the formula (1-1), (1-2), (1-3), or (1-4) below (especially formula (1-1) or (1-4)), more preferably a compound represented by the formula (1-1-1), (1-1-2), (1-2-1), (1-3-1), (1-4-1), or (1-4-2) below (especially formula (1-1-1) or (1-4-1)), among others.

The tetrazine compound of formula (1) may be a commercial product or may be synthesized by known methods.

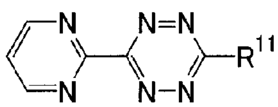

(1-1)

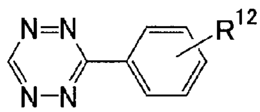

(1-2)

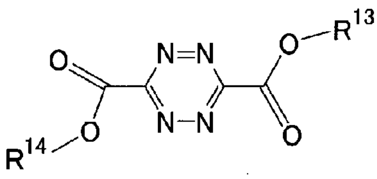

(1-3)

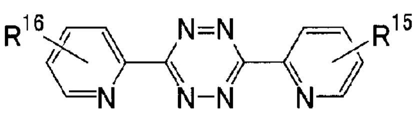

(1-4)

In formula (1-1), $R^{11}$ represents a hydrogen atom (-H), -COOR$^{17}$ in which $R^{17}$ represents either a hydrogen atom (-H) or an alkyl group, or a C1-C11 monovalent hydrocarbon group optionally containing a heteroatom, and $R^{11}$ may form a salt.

In formula (1-2), $R^{12}$ represents a functional group containing at least one atom selected from the group consisting of nitrogen, oxygen, sulfur, fluorine, and silicon atoms, and $R^{12}$ may form a salt.

In formula (1-3), $R^{13}$ and $R^{14}$ may be the same or different and each represent a hydrogen atom (-H) or an alkyl group, and $R^{13}$ and $R^{14}$ may each form a salt.

In formula (1-4), $R^{15}$ and $R^{16}$ may be the same or different and each represent a hydrogen atom (-H), -COOR$^{18}$ in which $R^{18}$ represents either a hydrogen atom (-H) or an alkyl group, or a functional group containing at least one atom selected from the group consisting of nitrogen, oxygen, sulfur, fluorine, and silicon atoms, and $R^{15}$ and $R^{16}$ may each form a salt.

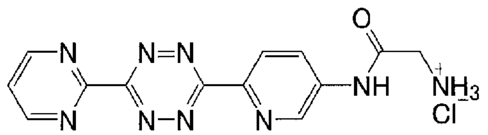 (1-1-1)

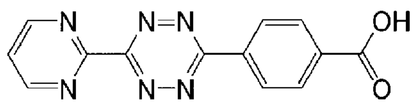 (1-1-2)

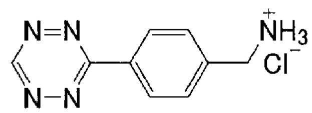 (1-2-1)

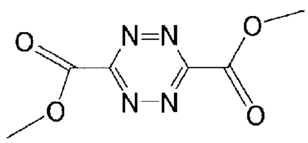 (1-3-1)

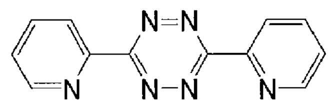 (1-4-1)

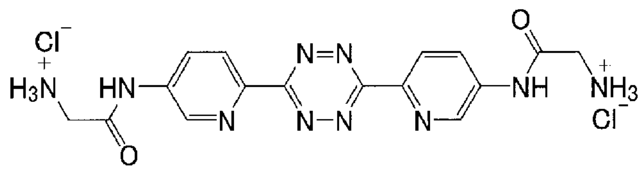 (1-4-2)

Examples of the heteroatom in $R^{11}$ include those described for the heteroatom in $R^1$ or $R^2$.

The carbon number of the hydrocarbon group as $R^{11}$ is as described for the hydrocarbon group as $R^1$ or $R^2$, and suitable embodiments thereof are also the same as above.

$R^{11}$ is preferably -COOR$^{17}$ or the heteroatom-containing hydrocarbon group because such a tetrazine compound can be expected to interact easily with a reinforcing filler (especially carbon black or silica), and therefore better performance on ice, fuel economy, and abrasion resistance can be obtained.

Examples of the hydrocarbon group as $R^{11}$ include those described for the hydrocarbon group as $R^1$ or $R^2$, and suitable embodiments thereof are also the same as above.

$R^{17}$ in the group -COOR$^{17}$ represents a hydrogen atom or an alkyl group. Examples of the alkyl group include those described for the alkyl group as $R^3$, and suitable embodiments thereof are also the same as above.

$R^{17}$ is preferably an alkyl group.

Examples of the functional group containing at least one atom selected from the group consisting of nitrogen,

oxygen, sulfur, fluorine, and silicon atoms as $R^{12}$ include those described for the substituent, and suitable embodiments thereof are also the same as above.

$R^{12}$ may be at any of the ortho, meta, and para positions. In order to more suitably achieve the effects of the present invention, $R^{12}$ is preferably at the para position.

Examples of the alkyl group as $R^{13}$ or $R^{14}$ include those described for the alkyl group as $R^3$, and suitable embodiments thereof are also the same as above. $R^{13}$ and $R^{14}$ are each preferably an alkyl group.

In order to obtain better performance on ice, fuel economy, and abrasion resistance, $R^{15}$ and $R^{16}$ are each preferably a hydrogen atom or a functional group containing at least one atom selected from the group consisting of nitrogen, oxygen, sulfur, fluorine, and silicon atoms.

$R^{18}$ in the group $-COOR^{18}$ represents a hydrogen atom or an alkyl group. Examples of the alkyl group include those described for the alkyl group as $R^3$, and suitable embodiments thereof are also the same as above.

$R^{18}$ is preferably an alkyl group.

Examples of the functional group containing at least one atom selected from the group consisting of nitrogen, oxygen, sulfur, fluorine, and silicon atoms as $R^{15}$ or $R^{16}$ include those described for the substituent, and suitable embodiments thereof are also the same as above.

$R^{15}$ and $R^{16}$ may each be at any of the ortho, meta, and para positions. In order to more suitably achieve the effects of the present invention, $R^{15}$ and $R^{16}$ are each preferably at the para position, and more preferably both at the para position.

The amount of the tetrazine compound per 100 parts by mass of the rubber component is preferably 0.2 parts by mass or more, more preferably 1.0 part by mass or more, still more preferably 1.5 parts by mass or more. When the amount is not less than the lower limit, the effects of the present invention tend to be well achieved. The amount is also preferably 10 parts by mass or less, more preferably 5.0 parts by mass or less, still more preferably 3.0 parts by mass or less. When the amount is not more than the upper limit, the effects of the present invention tend to be well achieved.

Herein, the amount of the tetrazine compound of formula (1) may refer to the combined amount of two or more tetrazine compounds, if present.

The rubber composition of the present invention preferably contains a plasticizer.

The term "plasticizer" refers to a material which imparts plasticity to a rubber component, and examples include oils and resins. These plasticizers may be used alone or in combinations of two or more. The plasticizer is preferably an oil or resin, among others, and is more preferably a resin because its use together with the copolymer can synergistically increase the effects of improving properties.

Examples of the oil include process oils, vegetable fats and oils, and mixtures thereof. Examples of process oils include paraffinic process oils, naphthenic process oils, and aromatic process oils. Examples of vegetable fats and oils include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used alone or in combinations of two or more. Preferred among these are aromatic process oils because they have compatibility with rubber and can also maintain tan $\delta$.

The resin preferably has a softening point of 30°C or higher, more preferably 60°C or higher, still more preferably 80°C or higher. A softening point of not lower than 30°C tends to lead to better rubber strength and wet grip performance. The softening point is also preferably 200°C or lower, more preferably 180°C or lower, still more preferably 140°C or lower. The resin having a softening point of not higher than 200°C tends to disperse well, resulting in better rubber strength, wet grip performance, and fuel economy.

Herein, the softening point of the resin is determined in accordance with JIS K 6220-1:2001 using a ring and ball softening point measuring apparatus and defined as the temperature at which the ball drops down.

Non-limiting examples of the resin include styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These resins may be used alone or in combinations of two or more. Among these, DCPD resins, styrene resins, and terpene resins are preferred in order to more suitably achieve the effects.

Examples of dicyclopentadiene resins include petroleum resins made mainly from dicyclopentadiene produced by dimerization of cyclopentadiene extracted from C5 fraction of petroleum.

The term "styrene resin" refers to a polymer produced from a styrenic monomer as a structural monomer, and examples include polymers produced by polymerizing a styrenic monomer as a main component (at least 50% by mass). Specific examples include homopolymers produced by polymerizing a styrenic monomer (e.g. styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene) alone, copolymers produced by copolymerizing two or more styrenic monomers, and copolymers of styrenic monomers and additional monomers copolymerizable therewith.

Examples of the additional monomers include acrylonitriles such as acrylonitrile and methacrylonitrile, unsaturated carboxylic acids such as acrylic acid and methacrylic acid, unsaturated carboxylic acid esters such as methyl acrylate and methyl methacrylate, dienes such as chloroprene, butadiene, and isoprene, olefins such as 1-butene and

1-pentene, and α,β-unsaturated carboxylic acids and acid anhydrides thereof such as maleic anhydride.

In particular, α-methylstyrene resins (e.g. α-methylstyrene homopolymers, copolymers of α-methylstyrene and styrene) are preferred in view of the balance of the properties.

Any terpene resin having units derived from a terpene compound may be used. Examples include polyterpenes (resins produced by polymerization of terpene compounds), terpene aromatic resins (resins produced by copolymerization of terpene compounds with aromatic compounds), aromatic-modified terpene resins (resins obtained by modification of terpene resins with aromatic compounds), and hydrogenated products of the foregoing resins.

The term "terpene compound" refers to a hydrocarbon having a composition represented by $(C_5H_8)_n$ or an oxygen-containing derivative thereof, each of which has a terpene backbone and is classified as, for example, a monoterpene ($C_{10}H_{16}$), sesquiterpene ($C_{15}H_{24}$), or diterpene ($C_{20}H_{32}$). Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Other examples of the terpene compounds include resin acids (rosin acids) such as abietic acid, neoabietic acid, palustric acid, levopimaric acid, pimaric acid, and isopimaric acid. In other words, the terpene resins include rosin resins mainly containing rosin acids produced by processing rosin. Examples of the rosin resins include natural rosin resins (polymerized rosins) such as gum rosins, wood rosins, and tall oil rosins; modified rosin resins such as maleic acid-modified rosin resins and rosin-modified phenol resins; rosin esters such as rosin glycerol esters; and disproportionated rosin resins obtained by disproportionation of rosin resins.

The aromatic compounds may be any compound having an aromatic ring, and examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene and styrene derivatives such as alkylstyrenes, alkoxystyrenes, and unsaturated hydrocarbon group-containing styrenes. Phenol is preferred among these.

Examples of the resin include products available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JX Energy Corporation, Arakawa Chemical Industries, Ltd., and Taoka Chemical Co., Ltd.

The amount of the resin per 100 parts by mass of the rubber component is preferably 1 part by mass or more, more preferably 3 parts by mass or more, but is preferably 50 parts by mass or less, more preferably 30 parts by mass or less, still more preferably 20 parts by mass or less, particularly preferably 10 parts by mass or less. When the amount is within the range indicated above, the effects can be more suitably achieved.

The total amount of plasticizers (preferably oils) per 100 parts by mass of the rubber component is preferably 1 part by mass or more, more preferably 10 parts by mass or more, particularly preferably 50 parts by mass or more. When the total amount is not less than 1 part by mass, good abrasion resistance and good fuel economy tend to be obtained. The use of 50 parts by mass or more of plasticizers together with the copolymer can synergistically increase the effects of improving properties. The total amount is also preferably 200 parts by mass or less, more preferably 150 parts by mass or less, still more preferably 100 parts by mass or less. When the total amount is not more than 200 parts by mass, good abrasion resistance and good wet grip performance tend to be obtained.

The rubber composition of the present invention preferably contains a farnesene resin. The term "farnesene resin" refers to a polymer produced by polymerizing farnesene as a monomer component. Farnesene exists in isomeric forms, including α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

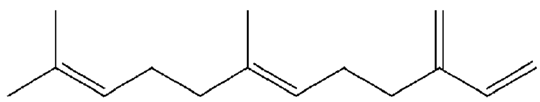

The use of a farnesene resin as a softener together with the copolymer can synergistically increase the effects of improving properties . It is preferred to add a farnesene resin in place of a conventionally used softener such as oil. In this case, the effects of the present invention can be more suitably achieved.

The farnesene resin may be a homopolymer of farnesene (farnesene homopolymer) or a copolymer of farnesene and a vinyl monomer (farnesene-vinyl monomer copolymer). Examples of the vinyl monomer include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylene; and conjugated diene compounds such as butadiene and isoprene.

Styrene or butadiene is preferred among these. In other words, the farnesene-vinyl monomer copolymer is preferably a copolymer of farnesene and styrene (farnesene-styrene copolymer) or a copolymer of farnesene and butadiene (farnesene-butadiene copolymer). The use of a farnesene-styrene copolymer can increase the effects of improving rubber strength, handling stability, wet grip performance, and abrasion resistance. The use of a farnesene-butadiene copolymer can increase the effects of improving fuel economy and abrasion resistance.

The farnesene homopolymer preferably has a glass transition temperature (Tg) of -60°C or lower, more preferably -70°C or lower, but preferably -120°C or higher, more preferably -110°C or higher. Farnesene homopolymers having a Tg within the range indicated above can be suitably used as softeners for tires.

For the same reason, the farnesene-styrene copolymer preferably has a Tg of -15°C or lower, more preferably -30°C or lower, but preferably -80°C or higher, more preferably -70°C or higher.

For the same reason, the farnesene-butadiene copolymer preferably has a Tg of -60°C or lower, more preferably -70°C or lower, but preferably -120°C or higher, more preferably -110°C or higher.

Herein, the Tg of the farnesene resin is measured using a differential scanning calorimeter (Q200, TA Instruments Japan) at a temperature increase rate of 10°C/min in accordance with JIS K 7121:1987.

The farnesene homopolymer preferably has a weight average molecular weight (Mw) of 3, 000 or higher, more preferably 5, 000 or higher, still more preferably 8,000 or higher. A Mw of not lower than 3,000 tends to lead to improved handling stability and abrasion resistance. The Mw is also preferably 500,000 or lower, more preferably 300,000 or lower, still more preferably 150, 000 or lower. A Mw of not higher than 500, 000 tends to lead to improved processability and abrasion resistance.

The farnesene-vinyl monomer copolymer preferably has a Mw of 3,000 or higher, more preferably 5,000 or higher, still more preferably 8,000 or higher. A Mw of not lower than 3,000 tends to lead to improved handling stability. The Mw is also preferably 500,000 or lower, more preferably 300,000 or lower, still more preferably 150, 000 or lower, particularly preferably 100, 000 or lower. A Mw of not higher than 500, 000 tends to lead to improved wet grip performance.

Farnesene homopolymers and farnesene-vinyl monomer copolymers having Mw within the respective ranges indicated above are in the liquid state at room temperature and can be suitably used as softeners for tires.

The farnesene homopolymer preferably has a melt viscosity of 1,000 Pa·s or lower, more preferably 200 Pa·s or lower, but preferably 0.1 Pa·s or higher, more preferably 0.5 Pa·s or higher. Farnesene homopolymers having a melt viscosity within the range indicated above can be suitably used as softeners for tires and are also excellent in bloom resistance.

For the same reason, the farnesene-vinyl monomer copolymer preferably has a melt viscosity of 1,000 Pa·s or lower, more preferably 650 Pa·s or lower, still more preferably 200 Pa·s or lower, but preferably 1 Pa·s or higher, more preferably 5 Pa·s or higher.

Herein, the melt viscosity of the farnesene resin is measured at 38°C using a Brookfield-type viscometer available from BROOKFIELD ENGINEERING LABS. INC.

The farnesene homopolymer preferably has a farnesene content of 80% by mass or higher, more preferably 90% by mass or higher based on 100% by mass of the total monomer components. The farnesene content may be 100% by mass.

The farnesene-vinyl monomer copolymer preferably has a combined content of farnesene and vinyl monomer of 80% by mass or higher, more preferably 90% by mass or higher based on 100% by mass of the total monomer components. The combined content may be 100% by mass. The farnesene/vinyl monomer copolymerization ratio, farnesene:vinyl monomer, is preferably 99/1 to 25/75, more preferably 80/20 to 40/60 by mass.

The farnesene resin may be synthesized by known methods. For example, in the case of synthesis by anion polymerization, hexane, farnesene, and sec-butyllithium, and optionally a vinyl monomer may be charged into a sufficiently nitrogen-purged, pressure-resistant vessel, the mixture may then be warmed and stirred for several hours, and the resulting polymerization solution may be quenched and then dried in vacuo, whereby a liquid farnesene resin can be obtained.

The procedure for polymerization in the preparation of the farnesene homopolymer is not particularly limited. For example, all the monomers may be polymerized at once, or the monomers may be sequentially added and polymerized. The procedure for copolymerization in the preparation of the farnesene-vinyl monomer copolymer is also not particularly limited. For example, all the monomers may be randomly copolymerized at once, or a specific monomer (e.g. farnesene or butadiene monomer alone) may previously be polymerized before the remaining monomer is added and copolymerized therewith, or each specific monomer may previously be individually polymerized before the resulting polymers are block-copolymerized.

The farnesene used in the farnesene resin may be prepared from petroleum resources by chemical synthesis, or may be extracted from insects such as Aphididae or plants such as apples. Preferably, it is prepared by culturing a microorganism using a carbon source derived from a saccharide. The farnesene resin may be efficiently prepared from such farnesene.

The saccharide may be a monosaccharide, disaccharide, or polysaccharide, or a combination thereof. Examples

of the monosaccharide include glucose, galactose, mannose, fructose, and ribose. Examples of the disaccharide include sucrose, lactose, maltose, trehalose, and cellobiose. Examples of the polysaccharide include starch, glycogen, cellulose, and chitin.

Saccharides suitable for preparing farnesene can be obtained from a wide variety of materials, such as sugar cane, bagasse, Miscanthus, sugar beet, sorghum, grain sorghum, switchgrass, barley, hemp, kenaf, potato, sweet potato, cassava, sunflower, fruits, molasses, whey, skim milk, corn, straw, grain, wheat, wood, paper, wheat straw, and cotton. Cellulosic wastes and other biomass materials may also be used. Preferred among these are plants of the genus *Saccharum* such as sugar cane (*Saccharum officinarum*), with sugar cane being more preferred.

The microorganism may be any microorganism capable of producing farnesene through culture. Examples include eukaryotes, bacteria, and archaebacteria. Examples of eukaryotes include yeast and plants.

The microorganism may be a transformant. The transformant may be obtained by introducing a foreign gene into a host microorganism. The foreign gene is preferably, but not limited to, a foreign gene involved in the production of farnesene because it can further improve farnesene production efficiency.

The conditions for culture are not particularly limited as long as they allow the microorganism to produce farnesene. The medium used for culturing the microorganism may be any medium commonly used for culturing microorganisms. Specific examples include, in the case of bacteria, KB medium and LB medium; in the case of yeast, YM medium, KY medium, F101 medium, YPD medium, and YPAD medium; and in the case of plants, basal media such as White medium, Heller medium, SH medium (Schenk and Hildebrandt medium), MS medium (Murashige and Skoog medium), LS medium (Linsmaier and Skoog medium), Gamborg medium, B5 medium, MB medium, and WP medium (for woody plants).

The culture temperature is preferably 0 to 50°C, more preferably 10 to 40°C, still more preferably 20 to 35°C, depending on the type of microorganism. The pH is preferably 3 to 11, more preferably 4 to 10, still more preferably 5 to 9. Moreover, the microorganism may be cultured either anaerobically or aerobically depending on its type.

The microorganism may also be cultured in a batch process, or in a continuous process using a bioreactor. Specific examples of the culturing method include shaking culture and rotary culture. Farnesene may be accumulated in the cells of the microorganism, or may be produced and accumulated in the culture supernatant.

When farnesene is to be recovered from the cultured microorganism, the microorganism may be collected by centrifugation and then disrupted, followed by extracting farnesene from the disrupted solution with a solvent such as 1-butanol. Such solvent extraction may appropriately be combined with a known purification process such as chromatography. The disruption of the microorganism is preferably carried out at a low temperature, for example at 4°C, in order to prevent modification and breakdown of farnesene. The microorganism may be physically disrupted using glass beads, for example.

When farnesene is to be recovered from the culture supernatant, the culture may be centrifuged to remove the cells, followed by extracting farnesene from the resulting supernatant with a solvent such as 1-butanol.

Farnesene resins produced from such microorganism-derived farnesenes are available from the market. For example, products of KURARAY Co., Ltd. may be used.

The amount of the farnesene resin per 100 parts by mass of the rubber component is preferably 1 part by mass or more, more preferably 3 parts by mass or more, still more preferably 5 parts by mass or more. When the amount is not less than 1 part by mass, the use of the farnesene resin tends to be sufficiently effective in improving properties. The amount is also preferably 50 parts by mass or less, more preferably 40 parts by mass or less, still more preferably 30 parts by mass or less, particularly preferably 20 parts by mass or less. When the amount is not more than 50 parts by mass, good fuel economy, wet grip performance, handling stability, and abrasion resistance (especially good handling stability and abrasion resistance) tend to be obtained.

The rubber composition of the present invention preferably contains a particulate zinc carrier that includes a silicate particle and finely divided zinc oxide or finely divided basic zinc carbonate supported on the surface of the silicate particle. Its use together with the copolymer can synergistically increase the effects of improving properties.

The particulate zinc carrier in the present invention is obtained by allowing finely divided zinc oxide or finely divided basic zinc carbonate to be supported on the surface of a silicate particle. Since the surface of silicate particles has affinity for finely divided zinc oxide and finely divided basic zinc carbonate, it can uniformly support finely divided zinc oxide or finely divided basic zinc carbonate.

The amount of supported finely divided zinc oxide or finely divided basic zinc carbonate, calculated as metallic zinc, is preferably within a range of 6 to 75% by mass. The lower limit of the amount is more preferably 15% by mass or more, still more preferably 25% by mass or more, particularly preferably 35% by mass or more, while the upper limit is more preferably 65% by mass or less, still more preferably 55% by mass or less. When the amount is within the range indicated above, the effects of the present invention can be more suitably achieved.

The supported amount calculated as metallic zinc may be calculated by converting the amount of supported finely divided zinc oxide or finely divided basic zinc carbonate into metallic zinc to obtain a Zn equivalent mass, and using it in the following equation:

Supported amount calculated as metallic zinc (% by mass) = [(Zn equivalent mass)/(mass of particulate zinc carrier)] × 100.

The finely divided zinc oxide-supporting silicate particle (particulate zinc carrier) preferably has a BET specific surface area within a range of 10 to 55 $m^2/g$, more preferably 15 to 50 $m^2/g$, still more preferably 20 to 45 $m^2/g$.
The finely divided basic zinc carbonate-supporting silicate particle (particulate zinc carrier) preferably has a BET specific surface area within a range of 25 to 90 $m^2/g$, more preferably 30 to 85 $m^2/g$, still more preferably 35 to 80 $m^2/g$.
Finely divided basic zinc carbonate is finer than finely divided zinc oxide and has a higher BET specific surface area. Thus, the carrier with finely divided basic zinc carbonate has a higher BET specific surface area than the carrier with finely divided zinc oxide, as described above.
The BET specific surface area may be determined by a nitrogen adsorption method using a BET specific surface area meter. The BET specific surface area ($BET_{Zn}$) of the finely divided zinc oxide or finely divided basic zinc carbonate supported on the silicate particle may be calculated using the following equation:

$$BET_{Zn} = \{(BET_{Zn\text{-}Si} \times W_{Zn}) + W_{Si} (BET_{Zn\text{-}Si} - BET_{Si})\}/W_{Zn}$$

wherein $BET_{Zn\text{-}Si}$: the BET specific surface area of the particulate zinc carrier;
$BET_{Si}$: the BET specific surface area of the silicate particle;
$W_{Zn}$: the mass (%) of the zinc oxide or basic zinc carbonate in the particulate zinc carrier;
$W_{Si}$: the mass (%) of the silicate particle in the particulate zinc carrier.

The BET specific surface area ($BET_{Zn}$) of the finely divided zinc oxide or finely divided basic zinc carbonate supported on the surface of the silicate particle is preferably within a range of 15 to 100 $m^2/g$, more preferably 40 to 80 $m^2/g$, for finely divided zinc oxide; and preferably within a range of 15 to 100 $m^2/g$, more preferably 40 to 80 $m^2/g$, for finely divided basic zinc carbonate.
The particulate zinc carrier having an excessively low BET specific surface area cannot produce a sufficient crosslinking-promoting effect, thus failing to sufficiently improve abrasion resistance and other properties. Also, the particulate zinc carrier having an excessively high BET specific surface area may contain non-supported free finely divided zinc oxide or finely divided basic zinc carbonate, which can form aggregated particles and prevent formation of a uniform crosslinked structure. Furthermore, since a relatively increased amount of zinc oxide or basic zinc carbonate is supported, smaller economic benefits may be obtained.
The silicate particle is preferably an aluminum silicate mineral particle. Examples of silicate particles other than aluminum silicate mineral particles include talc, mica, feldspar, bentonite, magnesium silicate, silica, calcium silicate (wollastonite), and diatomite.
The aluminum silicate mineral particle may be, for example, at least one selected from kaolinite, halloysite, pyrophyllite, or sericite.
In the present invention, the aluminum silicate mineral particle is preferably an anhydrous aluminum silicate mineral particle. The anhydrous aluminum silicate mineral particle may be, for example, one produced by firing at least one selected from kaolinite, halloysite, pyrophyllite, or sericite. For example, it may be produced by firing the foregoing clay mineral consisting of fine particles, at least 80% of which have a particle size of 2 μm or less, at a firing temperature of 500 to 900°C.
The particulate zinc carrier in the present invention may be prepared, for example, by mixing an acidic aqueous solution of a zinc salt with an alkaline aqueous solution in the presence of a silicate particle to precipitate finely divided zinc oxide or finely divided basic zinc carbonate so that the finely divided zinc oxide or finely divided basic zinc carbonate is supported on the surface of the silicate particle.
The process of mixing an acidic aqueous solution of a zinc salt with an alkaline aqueous solution in the presence of a silicate particle to precipitate finely divided zinc oxide or finely divided basic zinc carbonate may be carried out specifically by any of the following methods.
(1) A silicate particle is dispersed in an acidic aqueous solution of a zinc salt, and an alkaline aqueous solution is added to the dispersion.
(2) A silicate particle is dispersed in an alkaline aqueous solution, and an acidic aqueous solution of a zinc salt is added to the dispersion.
(3) A silicate particle is dispersed in water, and an acidic aqueous solution of a zinc salt and an alkaline aqueous

solution are simultaneously added to the dispersion.

The method (1) is particularly preferred among the methods (1) to (3).

The acidic aqueous solution of a zinc salt may be prepared, for example, by adding a zinc salt such as zinc oxide, zinc hydroxide, basic zinc carbonate, zinc sulfate, or zinc nitrate to an acidic aqueous solution. The zinc oxide may be any zinc oxide used as an industrial material. The acidic aqueous solution may be an aqueous solution of an acid such as hydrochloric acid, sulfuric acid, nitric acid, or carbonic acid. The acidic aqueous solution of a zinc salt may also be prepared by adding a water-soluble zinc compound such as zinc chloride to an acidic aqueous solution.

The alkaline aqueous solution may be, for example, an aqueous solution of sodium hydroxide, potassium hydroxide, sodium carbonate, or other alkali. Usually, the alkaline aqueous solution containing sodium hydroxide, potassium hydroxide, or the like may be used to precipitate and support finely divided zinc oxide. The acidic aqueous solution containing carbonic acid or the alkaline aqueous solution containing sodium carbonate or the like may be used to precipitate and support finely divided basic zinc carbonate.

The basic zinc carbonate-supporting silicate particle may also be prepared, for example, by treating a finely divided zinc oxide-supporting silicate particle prepared as above with an ammonium salt aqueous solution or introducing carbon dioxide gas into an aqueous suspension of the finely divided zinc oxide-supporting silicate particle for carbonation, thereby converting the supported finely divided zinc oxide to finely divided basic zinc carbonate. These treatments may be used alone or in combination.

The ammonium salt aqueous solution may be an aqueous solution of ammonium hydroxide, ammonium hydrogen carbonate, ammonium carbonate, or other ammonium salts. These ammonium salt aqueous solutions may be used alone or in combinations of two or more.

By conducting the treatment with an ammonium salt aqueous solution to convert finely divided zinc oxide to finely divided basic zinc carbonate as described above, finer particles can be supported.

After finely divided zinc oxide or finely divided basic zinc carbonate is precipitated and supported on the surface of the aluminum silicate mineral particle, it is usually washed sufficiently with water, dehydrated/dried, and pulverized.

The particulate zinc carrier may be surface treated with at least one selected from organic acids, fatty acids, fatty acid metal salts, fatty acid esters, resin acids, metal resinates, resin acid esters, silicic acid, silicic acid salts (e.g. Na salt), or silane coupling agents. Any structure in which the surface is entirely or partially covered with the agent may be used. It is not always necessary to continuously cover the entire surface.

When the particulate zinc carrier is in the form of aqueous slurry, the surface treatment may be carried out in a wet process using a surface treatment agent as it is or after it is dissolved in an appropriate solvent at an appropriate temperature. When the particulate zinc carrier is in the form of powder, the surface treatment may be carried out in a dry process using a surface treatment agent as it is or after it is dissolved in an appropriate solvent at an appropriate temperature.

The particulate zinc carrier may be a product of Shiraishi Calcium Kaisha Ltd, for example.

The amount of the particulate zinc carrier per 100 parts by mass of the rubber component is preferably 0.3 parts by mass or more, more preferably 0.5 parts by mass or more, still more preferably 0.6 parts by mass or more, particularly preferably 0.7 parts by mass or more, but is preferably 2.0 parts by mass or less, more preferably 1.8 parts by mass or less, still more preferably 1.6 parts by mass or less. When the amount is within the range indicated above, the effects of the present invention can be more suitably achieved.

The rubber composition of the present invention preferably contains sulfur.

Examples of the sulfur include those used commonly in the rubber industry, such as powdered sulfur, precipitated sulfur, colloidal sulfur, insoluble sulfur, highly dispersible sulfur, and soluble sulfur. These types of sulfur may be used alone or in combinations of two or more.

The sulfur may be a product of, for example, Tsurumi Chemical Industry Co., Ltd., Karuizawa sulfur Co., Ltd., Shikoku Chemicals Corporation, Flexsys, Nippon Kanryu Industry Co., Ltd., or Hosoi Chemical Industry Co., Ltd.

The amount of the sulfur, if present, per 100 parts by mass of the rubber component is preferably 0.5 parts by mass or more, more preferably 0.8 parts by mass or more, but is preferably 3.0 parts by mass or less, more preferably 2.5 parts by mass or less. When the amount is within the range indicated above, the effects of the present invention tend to be well achieved.

The amount of the particulate zinc carrier per 100 parts by mass of the sulfur is preferably 30 parts by mass or more, more preferably 40 parts by mass or more, still more preferably 60 parts by mass or more, but is preferably 200 parts by mass or less, more preferably 180 parts by mass or less, still more preferably 160 parts by mass or less, particularly preferably 120 parts by mass or less. When the amount is within the range indicated above, the effects of the present invention can be more suitably achieved.

The rubber composition of the present invention preferably contains zinc oxide.

The rubber composition containing the particulate zinc carrier may contain zinc oxide, but the amount of the zinc oxide is preferably as small as possible.

The zinc oxide may be a conventional one, and examples include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide per 100 parts by mass of the rubber component is preferably 0.5 parts by mass or more, more preferably 1 part by mass or more, but is preferably 10 parts by mass or less, more preferably 5 parts by mass or less.

When the particulate zinc carrier is present, the amount of the zinc oxide per 100 parts by mass of the rubber component is preferably 0.5 parts by mass or less, more preferably 0.1 parts by mass or less, still more preferably 0 parts by mass (i.e. absence).

The rubber composition of the present invention preferably contains an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl) propionate]methane. These antioxidants may be used alone or in combinations of two or more. Among these, p-phenylenediamine antioxidants are preferred.

The antioxidant may be a product of, for example, Seiko Chemical Co., Ltd., Sumitomo Chemical Co., Ltd., Ouchi Shinko Chemical Industrial Co., Ltd., or Flexsys.

The amount of the antioxidant per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the effects of the present invention tend to be well achieved.

The rubber composition of the present invention preferably contains stearic acid.

The stearic acid may be a conventional one, and examples include products of NOF Corporation, Kao Corporation, Wako Pure Chemical Industries, Ltd., and Chiba Fatty Acid Co., Ltd.

The amount of the stearic acid per 100 parts by mass of the rubber component is preferably 0.5 parts by mass or more, more preferably 1 part by mass or more, but is preferably 10 parts by mass or less, more preferably 5 parts by mass or less. When the amount is within the range indicated above, the effects of the present invention tend to be well achieved.

The rubber composition of the present invention preferably contains a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or other similar monomers. These waxes may be used alone or in combinations of two or more. Preferred among these are petroleum waxes, with paraffin waxes being more preferred.

The wax may be a product of, for example, Ouchi Shinko Chemical Industrial Co., Ltd., Nippon Seiro Co., Ltd., or Seiko Chemical Co., Ltd.

In view of the balance of the properties, the amount of the wax per 100 parts by mass of the rubber component is preferably 0.3 to 20 parts by mass, more preferably 0.5 to 10 parts by mass.

The rubber composition of the present invention preferably contains a processing aid.

Any processing aid commonly used in the tire industry may be used. Examples include fatty acid metal salts, fatty acid amides, amide esters, silica surface activators, fatty acid esters, mixtures of fatty acid metal salts and amide esters, and mixtures of fatty acid metal salts and fatty acid amides. These processing aids may be used alone or in combinations of two or more. Among these, fatty acid metal salts, amide esters, and mixtures of fatty acid metal salts and amide esters or fatty acid amides are preferred, with mixtures of fatty acid metal salts and fatty acid amides being particularly preferred.

Examples of the fatty acids of the fatty acid metal salts include, but are not limited to, saturated or unsaturated fatty acids, preferably C6-C28, more preferably C10-C25, still more preferably C14-C20 saturated or unsaturated fatty acids, such as lauric acid, myristic acid, palmitic acid, stearic acid, oleic acid, linoleic acid, linolenic acid, arachidic acid, behenic acid, and nervonic acid. These fatty acids may be used alone, or two or more of these may be used in admixture. Among these, saturated fatty acids are preferred, with C14-C20 saturated fatty acids being more preferred.

Examples of the metals of the fatty acid metal salts include alkali metals such as potassium and sodium, and alkaline earth metals such as magnesium, calcium, and barium, as well as zinc, nickel, and molybdenum. Among these, zinc or calcium is preferred, with zinc being more preferred.

The fatty acid amides include saturated and unsaturated fatty acid amides. Examples of the saturated fatty acid amides include N-(1-oxooctadecyl)sarcosine, stearamide, and behenamide. Examples of the unsaturated fatty acid amides include oleamide and erucamide.

Examples of the mixtures of fatty acid metal salts and fatty acid amides include products available from STRUKTOL.

The amount of the processing aid per 100 parts by mass of the rubber component is preferably 0.1 parts by mass or more, more preferably 0.5 parts by mass or more, still more preferably 1 part by mass or more, but is preferably 10 parts by mass or less, more preferably 5 parts by mass or less. When the amount is within the range indicated above, the effects of the present invention tend to be better achieved.

The rubber composition of the present invention preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These vulcanization accelerators may be used alone or in combinations of two or more. Among these, sulfenamide vulcanization accelerators or guanidine vulcanization accelerators are preferred in order to more suitably achieve the effects of the present invention.

The amount of the vulcanization accelerator per 100 parts by mass of the rubber component is preferably 1 part by mass or more, more preferably 2 parts by mass or more, but is preferably 10 parts by mass or less, more preferably 7 parts by mass or less. When the amount is within the range indicated above, the effects of the present invention tend to be better achieved.

The rubber composition of the present invention may contain, in addition to the above-described components, additives commonly used in the tire industry. Examples of such additives include organic peroxides; and fillers such as calcium carbonate, talc, alumina, clay, aluminum hydroxide, and mica.

The rubber composition containing the copolymer together with other rubbers and additives may be prepared by known methods, such as, for example, by kneading the components using a known mixing machine such as a roll mill or a Banbury mixer.

With regard to the kneading conditions for adding additives other than vulcanizing agents and vulcanization accelerators, the kneading temperature is usually 50 to 200°C, preferably 80 to 190°C, and the kneading time is usually 30 seconds to 30 minutes, preferably 1 minute to 30 minutes.

When vulcanizing agents and/or vulcanization accelerators are added, the kneading temperature is usually not higher than 100°C, preferably in the range from room temperature to 80°C. Moreover, the composition containing a vulcanizing agent and/or vulcanization accelerator is usually subjected to a vulcanization treatment such as press vulcanization before use. The vulcanization temperature is usually 120 to 200°C, preferably 140 to 180°C.

The rubber composition of the present invention may be used in tire components and suitably in cap treads, especially for tires for trucks and buses.

The pneumatic tire according to the present invention may be produced using the rubber composition by usual methods. Specifically, an unvulcanized rubber composition containing additives as needed may be extruded into the shape of, for example, a cap tread for tires and then formed and assembled with other tire components on a tire building machine in a usual manner to build an unvulcanized tire, which may then be heated and pressurized in a vulcanizer to produce a pneumatic tire of the present invention.

The pneumatic tire of the present invention may be suitably used as a tire for trucks and buses.

EXAMPLES

The present invention will be specifically described below with reference to, but not limited to, examples.

[Production Example 1]

<Production of aromatic vinyl-conjugated diene copolymer 1 (Copolymer 1)>

A stainless steel polymerization reactor having an inner volume of 20 L and equipped with a stirrer was cleaned and dried, and the atmosphere in the reactor was replaced by dry nitrogen. The polymerization reactor was then charged with 7.65 kg of industrial hexane (trade name: hexane (general product), Sumitomo Chemical Co., Ltd., density: 0.68 g/mL), 2.93 kg of cyclohexane, 240 g of 1,3-butadiene, 510 g of styrene, 8.8 mL of tetrahydrofuran, and 0.9 mL of ethylene glycol dibutyl ether. Subsequently, a small amount of a solution of n-butyllithium (n-BuLi) in hexane was introduced as a scavenger into the polymerization reactor to preliminarily detoxify impurities which can act to deactivate the polymerization initiator. Then, an n-hexane solution containing 3.12 mmol of n-BuLi was introduced into the polymerization reactor to initiate a polymerization reaction.

The polymerization reaction was performed for 4 hours and 10 minutes. During the polymerization reaction,

the temperature inside the polymerization reactor was adjusted to 65°C, and the solution in the polymerization reactor was stirred at 100 rpm. Twenty minutes after the start of the polymerization, 660 g of 1,3-butadiene and 90 g of styrene were continuously fed into the polymerization reactor over a period of 3 hours and 20 minutes. Next, while maintaining the polymerization reactor temperature at 65°C, the resulting polymerization solution in the polymerization reactor was stirred at 100 rpm and 0.25 mmol of silicon tetrachloride was added to the polymerization solution, followed by stirring for 15 minutes. Thereafter, 5 mL of a hexane solution containing 0.8 mL of methanol was introduced into the polymerization reactor, and the resulting polymerization solution was stirred for five minutes.

The stirred contents in the polymerization reactor were sampled and analyzed for the Mw, vinyl bond content, styrene unit content, ΔTg, and proportion of isolated styrene units of the copolymer.

To the stirred contents were added 6.0 g of 2-tert-butyl-6-(3-tert-butyl-2-hydroxy-5-methylbenzyl)-4-methylphenyl acrylate (trade name: Sumilizer GM, Sumitomo Chemical Co., Ltd.), 3.0 g of pentaerythrityl tetrakis(3-laurylthiopropionate) (trade name: Sumilizer TP-D, Sumitomo Chemical Co., Ltd.), and 562.5 g of an extender oil (trade name: JOMO process NC-140, JX Energy Corporation) to give a mixture. Then, the most volatile components of the mixture were evaporated at room temperature for 24 hours, followed by drying at 55°C for 12 hours under reduced pressure to obtain an aromatic vinyl-conjugated diene copolymer 1 (Copolymer 1) .

[Production Example 2]

<Production of aromatic vinyl-conjugated diene copolymer 2 (Copolymer 2)>

A stainless steel polymerization reactor having an inner volume of 20 L and equipped with a stirrer was cleaned and dried, and the atmosphere in the reactor was replaced by dry nitrogen. The polymerization reactor was then charged with 7.65 kg of "hexane (general product)", 2.93 kg of cyclohexane, 298 g of 1,3-butadiene, 553 g of styrene, 8.8 mL of tetrahydrofuran, and 0.9 mL of ethylene glycol dibutyl ether. Subsequently, a solution of n-BuLi in hexane was introduced into the polymerization reactor, and then an n-hexane solution containing 3.06 mmol of n-BuLi was introduced into the polymerization reactor to initiate a polymerization reaction.

The polymerization reaction was performed for 4 hours and 10 minutes. During the polymerization reaction, the temperature inside the polymerization reactor was adjusted to 65°C, and the solution in the polymerization reactor was stirred at 130 rpm. Twenty minutes after the start of the polymerization, 630 g of 1,3-butadiene and 66 g of styrene were continuously fed into the polymerization reactor over a period of 3 hours and 20 minutes. Next, while maintaining the polymerization reactor temperature at 65°C, the resulting polymerization solution in the polymerization reactor was stirred at 130 rpm and 0.27 mmol of silicon tetrachloride was added to the polymerization solution, followed by stirring for 15 minutes. Thereafter, 5 mL of a hexane solution containing 0.8 mL of methanol was introduced into the polymerization reactor, and the resulting polymerization solution was stirred for five minutes.

The stirred contents in the polymerization reactor were sampled and analyzed for the Mw, vinyl bond content, styrene unit content, ΔTg, and proportion of isolated styrene units of the copolymer.

To the stirred contents were added 6.2 g of "Sumilizer GM", 3.1 g of "Sumilizer TP-D", and 580 g of "JOMO process NC-140" to give a mixture. Then, the most volatile components of the mixture were evaporated at room temperature for 24 hours, followed by drying at 55°C for 12 hours under reduced pressure to obtain an aromatic vinyl-conjugated diene copolymer 2 (Copolymer 2).

[Production Example 3]

<Production of aromatic vinyl-conjugated diene copolymer 3 (Copolymer 3)>

A stainless steel polymerization reactor having an inner volume of 20 L and equipped with a stirrer was cleaned and dried, and the atmosphere in the reactor was replaced by dry nitrogen. The polymerization reactor was then charged with 7.65 kg of "hexane (general product)", 2.93 kg of cyclohexane, 240 g of 1,3-butadiene, 360 g of styrene, 8.8 mL of tetrahydrofuran, and 0.9 mL of ethylene glycol dibutyl ether. Subsequently, a solution of n-BuLi in hexane was introduced into the polymerization reactor, and then an n-hexane solution containing 2.64 mmol of n-BuLi was introduced into the polymerization reactor to initiate a polymerization reaction.

The polymerization reaction was performed for 4 hours and 10 minutes. During the polymerization reaction, the temperature inside the polymerization reactor was adjusted to 65°C, and the solution in the polymerization reactor was stirred at 130 rpm. Twenty minutes after the start of the polymerization, 480 g of 1,3-butadiene and 120 g of styrene were continuously fed into the polymerization reactor over a period of 3 hours and 20 minutes. Next, while maintaining the polymerization reactor temperature at 65°C, the resulting polymerization solution in the polymerization reactor was stirred at 130 rpm and 0.24 mmol of silicon tetrachloride was added to the polymerization solution, followed by stirring for 15 minutes. Thereafter, 5 mL of a hexane solution containing 0.8 mL of methanol was introduced into the polymerization

reactor, and the resulting polymerization solution was stirred for five minutes.

The stirred contents in the polymerization reactor were sampled and analyzed for the Mw, vinyl bond content, styrene unit content, ΔTg, and proportion of isolated styrene units of the copolymer.

To the stirred contents were added 7.2 g of "Sumilizer GM", 3.6 g of "Sumilizer TP-D", and 450 g of "JOMO process NC-140" to give a mixture. Then, the most volatile components of the mixture were evaporated at room temperature for 24 hours, followed by drying at 55°C for 12 hours under reduced pressure to obtain an aromatic vinyl-conjugated diene copolymer 3 (Copolymer 3).

[Production Example 4]

<Production of aromatic vinyl-conjugated diene copolymer 4 (Copolymer 4)>

A stainless steel polymerization reactor having an inner volume of 20 L and equipped with a stirrer was cleaned and dried, and the atmosphere in the reactor was replaced by dry nitrogen. The polymerization reactor was then charged with 7.65 kg of "hexane (general product)", 2.93 kg of cyclohexane, 240 g of 1,3-butadiene, 360 g of styrene, 8.8 mL of tetrahydrofuran, and 0.9 mL of ethylene glycol dibutyl ether. Subsequently, a solution of n-BuLi in hexane was introduced into the polymerization reactor, and then an n-hexane solution containing 3.12 mmol of n-BuLi was introduced into the polymerization reactor to initiate a polymerization reaction.

The polymerization reaction was performed for 4 hours and 10 minutes. During the polymerization reaction, the temperature inside the polymerization reactor was adjusted to 65°C, and the solution in the polymerization reactor was stirred at 130 rpm, and 540 g of 1,3-butadiene and 360 g of styrene were continuously fed into the polymerization reactor over a period of 2 hours and 30 minutes. Next, while maintaining the polymerization reactor temperature at 65°C, the resulting polymerization solution in the polymerization reactor was stirred at 130 rpm and 0.25 mmol of silicon tetrachloride was added to the polymerization solution, followed by stirring for 15 minutes. Thereafter, 5 mL of a hexane solution containing 0.8 mL of methanol was introduced into the polymerization reactor, and the resulting polymerization solution was stirred for five minutes.

The stirred contents in the polymerization reactor were sampled and analyzed for the Mw, vinyl bond content, styrene unit content, ΔTg, and proportion of isolated styrene units of the copolymer.

To the stirred contents were added 8.0 g of "Sumilizer GM", 4.0 g of "Sumilizer TP-D", and 562.5 g of "JOMO process NC-140" to give a mixture. Then, the most volatile components of the mixture were evaporated at room temperature for 24 hours, followed by drying at 55°C for 12 hours under reduced pressure to obtain an aromatic vinyl-conjugated diene copolymer 4 (Copolymer 4).

Table 1 shows the results of analyses of Mw, vinyl bond content, styrene unit content, ΔTg before the addition of the extender oil, and proportion of isolated styrene units of Copolymers 1 to 4 obtained in Production Examples 1 to 4. The physical properties of Copolymers 1 to 4 were analyzed as described below.

1. Vinyl bond content (in mol%)

The vinyl bond content of the conjugated diene units of the copolymers was determined by infrared spectroscopy using the intensity of absorption around 910 $cm^{-1}$ which corresponds to the absorption peak for the vinyl group.

2. Styrene unit content (in % by mass)

The styrene unit content of the copolymers was determined from the refractive index in accordance with JIS K6383 (1995) .

3. Weight average molecular weight (Mw)

The Mw was measured by gel permeation chromatography (GPC) under the following conditions (1) to (8).

(1) Apparatus: Prominence available from Shimadzu Corporation
(2) Separation column: one PLgel 5 μm $10^5$ Å column and one PLgel 5 μm $10^6$ Å column connected to each other, both available from Agilent
(3) Measurement temperature: 40°C
(4) Carrier: tetrahydrofuran
(5) Flow rate: 1.0 mL/min
(6) Injection volume: 100 μL
(7) Detector: differential refractometer

(8) Molecular weight standards: polystyrene standards

4. Proportion of isolated styrene units (in %)

The structure of the copolymers was analyzed by measuring a $^1$H-NMR (AL400 available from Jeol Ltd.) spectrum at 400 MHz using deuterochloroform solvent. The sequences of styrene units were determined from the integrals of the ranges indicated below in the NMR spectrum. The calculated value of the meta and para protons on the aromatic ring determined from the following integrals (b) and (c) was subtracted from the following integral (a), and the ratio of the resulting integral value to a total of integrals (a) to (c) was defined as the proportion of isolated styrene units.

(a) isolated styrene unit, two to three sequential styrene units, four or more sequential styrene units: peak integral between 7.6 and 7.0 ppm
(b) two to three sequential styrene units (ortho protons): peak integral between 7.0 and 6.9 ppm
(c) four or more sequential styrene units (ortho protons): peak integral between 6.9 and 6.0 ppm

5. Glass transition temperature width (ΔTg)

A heat flow curve of each copolymer was determined using a differential scanning calorimeter DSC7020 (Hitachi High-Tech Science Corporation) by cooling the copolymer to -100°C in a nitrogen atmosphere, followed by heating to 100°C at a rate of 10°C/min. The difference between the extrapolated onset and extrapolated end of the baseline shift associated with the transition in the heat flow curve was recorded as ΔTg.

[Table 1]

| Copolymer | Copolymer 1 | Copolymer 2 | Copolymer 3 | Copolymer 4 |
|---|---|---|---|---|
| Vinyl bond content (mol%) | 24 | 24 | 24 | 24 |
| Styrene unit content (% by mass) | 40 | 40 | 40 | 40 |
| Proportion of isolated styrene units (%) | 82 | 83 | 82 | 76 |
| Mw | 1,250,000 | 1,100,000 | 1,300,000 | 1,130,000 |
| ΔTg (°C) | 11 | 12 | 6 | 24 |

[Production Example 5]

<Production of particulate zinc carrier>

An amount of 91.5 g of zinc oxide was added to 847 mL of a 5.5% by mass aqueous suspension of calcined clay, and they were sufficiently stirred. To the mixture were added 330 g of a 10% by mass aqueous solution of sodium carbonate and 340 g of a 10% by mass aqueous solution of zinc chloride, followed by stirring. Subsequently, 30% by mass carbon dioxide gas was injected into the resulting mixture until the pH reached 7 or lower so that basic zinc carbonate was precipitated on the surface of calcined clay, thereby synthesizing a particulate zinc carrier. The particulate zinc carrier was then subjected to dehydration, drying, and pulverization steps to obtain powder. A particulate zinc carrier was thus prepared.

The particulate zinc carrier had a BET specific surface area of 50 $m^2/g$. In the particulate zinc carrier, 45% by mass, calculated as metallic zinc, of basic zinc carbonate was supported on calcined clay. The supported basic zinc carbonate thus had a BET specific surface area of 60 $m^2/g$.

[Production Examples 6 and 7]

<Production of Carbon blacks B and C>

Carbon blacks were produced under the conditions shown in Table 2 using D-heavy oil as fuel oil and creosote oil as feedstock hydrocarbon (feedstock oil) in a carbon black reaction furnace in which a combustion zone, a feedstock introduction zone, and a rear reaction zone were joined in sequence. The combustion zone had an inner diameter of 1,100 mm and a length of 1,700 mm and was provided with an air inlet duct and a combustion burner. The feedstock introduction zone was connected to the combustion zone and included a narrow portion having an inner diameter of 175

mm and a length of 1, 050 mm and provided with a feedstock nozzle penetrating into the portion from the periphery. The rear reaction zone had an inner diameter of 400 mm and a length of 3,000 mm and was provided with a quenching device.

The carbon blacks were then heated under the conditions shown in Table 2 with no oxygen flow (in a nitrogen atmosphere) .

Table 2 shows the properties of the carbon blacks obtained in the production examples. The properties were measured as described above.

[Table 2]

| Production Example | 6 | 7 |
|---|---|---|
| Carbon black | B | C |
| Combustion air ($Nm^3/H$) | 5800 | 5800 |
| Fuel oil (kg/h) | 330 | 330 |
| Combustion gas temperature (°C) | 1700 | 1700 |
| Air for fuel atomization ($Nm^3/H$) | 120 | 120 |
| Feedstock oil (kg/h) | 1300 | 1200 |
| Heat treatment temperature (°C) | 1200 | 1200 |
| Heat treatment time (h) | 4 | 3 |
| $N_2SA$ ($m^2/g$) | 103 | 177 |
| DBP (mL/100 g) | 143 | 170 |
| Volatile matter content (900°C) (% by mass) | 0.38 | 0.45 |
| Volatile matter content (1500°C) (% by mass) | 0.48 | 0.67 |
| pH | 10.4 | 9.7 |
| Oil absorption number of compressed sample (mL/100 g) | 113 | 126 |
| CTAB ($m^2/g$) | 87 | 157 |

[Production Example 8]

<Production of modified conjugated diene polymer>

(Synthesis of conjugated diene polymer)

A catalyst composition (molar ratio of iodine atom to lanthanoid-containing compound: 2.0) was previously prepared by reacting and aging 0.90 mmol of 1,3-butadiene with a cyclohexane solution containing 0.18 mmol of neodymium versatate, a toluene solution containing 3.6 mmol of methylalumoxane, a toluene solution containing 6.7 mmol of diisobutylaluminum hydride, and a toluene solution containing 0.36 mmol of trimethylsilyl iodide for 60 minutes at 30°C. Next, 2.4 kg of cyclohexane and 300 g of 1, 3-butadiene were introduced into a 5 L autoclave purged with nitrogen. Then, the catalyst composition was introduced into the autoclave, and a polymerization reaction was performed for two hours at 30°C to give a polymer solution. The conversion rate of the introduced 1,3-butadiene was almost 100%.

In order to measure the physical properties of the conjugated diene polymer (hereinafter, also referred to as "polymer"), i.e. the unmodified polymer, a 200 g portion of the polymer solution was taken, to which a methanol solution containing 1.5 g of 2,4-di-tert-butyl-p-cresol was added to stop the polymerization reaction. Thereafter, the solvent was removed by steam stripping, and the product was dried using a roll at 110°C to obtain a dry product which was used as a polymer.

The polymer was measured for physical properties as described below and found to have a Mooney viscosity ($ML_{1+4}$, 100°C) of 12, a molecular weight distribution (Mw/Mn) of 1.6, a cis-1,4 bond content of 99.2% by mass, and a 1,2-vinyl bond content of 0.21% by mass.

[Mooney viscosity ($ML_{1+4}$, 100°C)]

The Mooney viscosity was measured at 100°C in accordance with JIS K 6300 using an L-type rotor with a preheating time of 1 minute and a rotor operation time of 4 minutes.

[Molecular weight distribution (Mw/Mn)]

The molecular weight distribution was determined using a gel permeation chromatograph (trade name: HLC-8120GPC, Tosoh Corporation) and a differential refractometer as a detector under the following conditions and calibrated with polystyrene standards.
Column: two columns of "GMHHXL" (trade name) available from Tosoh Corporation
Column temperature: 40°C
Mobile phase: tetrahydrofuran
Flow rate: 1.0 mL/min
Sample concentration: 10 mg/20 mL

[Cis-1,4 bond content, 1,2-vinyl bond content]

The cis-1, 4 bond content and 1,2-vinyl bond content were determined by $^{1}H$-NMR and $^{13}C$-NMR analyses . The NMR analyses were carried out using "EX-270" (trade name) available from Jeol Ltd. Specifically, in the $^{1}H$-NMR analysis, the ratio between 1,4-bonds and 1,2-bonds of the polymer was calculated from the signal intensities at 5.30-5.50 ppm (1,4-bond) and at 4.80-5.01 ppm (1,2-bond). Also, in the $^{13}C$-NMR analysis, the ratio between cis-1,4 bonds and trans-1,4 bonds of the polymer was calculated from the signal intensities at 27.5 ppm (cis-1,4 bond) and at 32.8 ppm (trans-1, 4 bond) . These calculated ratios were used to determine the cis-1,4 bond content (% by mass) and 1,2-vinyl bond content (% by mass).

(Synthesis of modified conjugated diene polymer)

A modified conjugated diene polymer (hereinafter, also referred to as "modified polymer") was prepared by treating the polymer solution of the conjugated diene polymer prepared as above as follows. To the polymer solution maintained at 30°C was added a toluene solution containing 1.71 mmol of 3-glycidoxypropyltrimethoxysilane, and they were reacted for 30 minutes to give a reaction solution. To the reaction solution was then added a toluene solution containing 1.71 mmol of 3-aminopropyltriethoxysilane, and they were stirred for 30 minutes. Subsequently, to the reaction solution was added a toluene solution containing 1.28 mmol of tetraisopropyl titanate, followed by stirring for 30 minutes. Then, the polymerization reaction was stopped by adding a methanol solution containing 1.5 g of 2,4-di-tert-butyl-p-cresol. The resulting solution was used as a modified polymer solution. The yield was 2.5 kg. To the modified polymer solution was then added 20 L of an aqueous solution with a pH of 10 adjusted with sodium hydroxide, followed by performing a condensation reaction at 110°C for two hours while removing the solvent. Thereafter, the reaction product was dried using a roll at 110°C to obtain a dry product which was used as a modified polymer.
The modified polymer was measured for physical properties as described below (but the molecular weight distribution (Mw/Mn) was measured under the same conditions as described for the polymer) and found to have a Mooney viscosity ($ML_{1+4}$, 125°C) of 46, a molecular weight distribution (Mw/Mn) of 2.4, a cold flow value of 0.3 mg/min, a temporal stability of 2, and a glass transition temperature of -106°C.

[Mooney viscosity ($ML_{1+4}$, 125°C)]

The Mooney viscosity was measured at 125°C in accordance with JIS K 6300 using an L-type rotor with a preheating time of 1 minute and a rotor operation time of 4 minutes.

[Cold flow value]

The cold flow value was measured by extruding the polymer through a 1/4 inch orifice at a pressure of 3.5 $lb/in^2$ and a temperature of 50°C. After allowing 10 minutes for the polymer to reach steady state, the rate of extrusion was measured and reported in milligrams per minute (mg/min).

[Temporal stability]

The temporal stability was determined by measuring Mooney viscosity ($ML_{1+4}$, 125°C) after storage in a thermostatic bath at 90°C for two days, and using it in the expression below. A smaller value indicates better temporal stability. Expression: [the Mooney viscosity ($ML_{1+4}$, 125°C) after storage in a thermostatic bath at 90°C for two days] - [the Mooney viscosity ($ML_{1+4}$, 125°C) measured immediately after the synthesis]

[Glass transition temperature]

The glass transition temperature was defined as the glass transition onset temperature measured at a temperature increase rate of 10°C/min using a differential scanning calorimeter (Q200, TA Instruments Japan) in accordance with JIS K 7121.

The chemicals used in the examples and comparative examples were listed below.
Copolymers 1 to 4: the copolymers obtained in Production Examples 1 to 4
Modified conjugated diene polymer: the modified polymer obtained in Production Example 8
Natural rubber: TSR20
Polybutadiene rubber: Ubepol BR150B available from Ube Industries, Ltd.
Silica A: 115 GR available from Solvay Japan ($N_2SA$: 115 $m^2/g$)
Silica B: VN3 available from Evonik ($N_2SA$: 175 $m^2/g$) Silica C: 9000GR available from Evonik ($N_2SA$: 235 $m^2/g$)
Silane coupling agent A: Si69 (bis(3-triethoxysilyl-propyl)tetrasulfide) available from Evonik
Silane coupling agent B: NXT (3-octanoylthio-1-propyl-triethoxysilane) available from Momentive
Silane coupling agent C: NXT-Z45 available from Momentive (copolymer of linking units A and B (linking unit A: 55 mol%, linking unit B: 45 mol%))
Carbon black A: DIABLACK N339 available from Mitsubishi Chemical Corporation ($N_2SA$: 96 $m^2/g$, DBP absorption: 124 mL/100 g)
Carbon black B: the carbon black obtained in Production Example 6
Carbon black C: the carbon black obtained in Production Example 7
Resin A: YS resin PX1150N available from Yasuhara Chemical Co., Ltd. (polyterpene (β-pinene resin), softening point: 115°C)
Resin B: YS POLYSTER T160 available from Yasuhara Chemical Co., Ltd. (terpene phenol resin, softening point: 160°C)
Resin C: Marukarez M-890A available from Maruzen Petrochemical Co., Ltd. (dicyclopentadiene resin, softening point: 105°C)
Resin D: PINECRYSTAL KR-85 available from Arakawa Chemical Industries, Ltd. (rosin resin, softening point: 80 to 87°C)
Resin E: SYLVARES SA85 available from Arizona Chemical (copolymer of α-methylstyrene and styrene, softening point: 85°C)
Oil: X-140 available from JX Nippon Oil & Energy Corporation (aromatic process oil)
Farnesene resin A: KB-101 available from Kuraray Co., Ltd. (farnesene homopolymer, Mw: 10,000, melt viscosity: 0.7 Pa·s, Tg: -72°C)
Farnesene resin B: FSR-221 available from Kuraray Co., Ltd. (farnesene-styrene copolymer, Mw: 10,000, copolymerization ratio (by mass): farnesene/styrene = 77/23, melt viscosity: 5.7 Pa·s, Tg: -54°C)
Farnesene resin C: FBR-746 available from Kuraray Co., Ltd. (farnesene-butadiene copolymer, Mw: 100,000, copolymerization ratio (by mass) : farnesene/butadiene = 60/40, melt viscosity: 603 Pa·s, Tg: -78°C)
Antioxidant: Antigene 3C available from Sumitomo Chemical Co., Ltd.
Stearic acid: stearic acid beads "TSUBAKI" available from NOF Corporation
Zinc oxide: Zinc oxide #1 available from Mitsui Mining & Smelting Co., Ltd.
Particulate zinc carrier: the particulate zinc carrier obtained in Production Example 5
Wax: Sunnoc N available from Ouchi Shinko Chemical Industrial Co., Ltd.
Processing aid: WB16 available from STRUKTOL (mixture of fatty acid metal salt (fatty acid calcium salt, constituent fatty acids: C14-C20 saturated fatty acids) and fatty acid amide)
Sulfur: Sulfur powder available from Tsurumi Chemical Industry Co., Ltd.
Vulcanization accelerator 1: Soxinol CZ (N-cyclohexyl-2-benzothiazolylsulfenamide) available from Sumitomo Chemical Co., Ltd.
Vulcanization accelerator 2: Soxinol D (1,3-diphenylguanidine) available from Sumitomo Chemical Co., Ltd.
Tetrazine compound A: a compound of formula (1-1-1)
Tetrazine compound B: a compound of formula (1-2-1)

(Examples and Comparative Examples)

According to each of the formulations shown in Tables 3 to 12, the materials other than the sulfur and vulcanization accelerators were kneaded for five minutes at 150°C using a 1.7 L Banbury mixer (Kobe Steel, Ltd.) to give a kneaded mixture. Next, the sulfur and vulcanization accelerators were added to the kneaded mixture, followed by kneading

for five minutes at 80°C using an open roll mill to give an unvulcanized rubber composition. The unvulcanized rubber composition was press-vulcanized for 20 minutes at 170°C in a 0.5 mm-thick die to obtain a vulcanized rubber composition.

Separately, the unvulcanized rubber composition prepared as above was formed into the shape of a cap tread and assembled with other tire components on a tire building machine to build an unvulcanized tire. The unvulcanized tire was vulcanized at 170°C for 12 minutes to prepare a test tire (size: 195/65R15) .

<Evaluations and testing methods>

In the following evaluations, Comparative Examples 1-1, 2-1, ..., and 10-1 are regarded as reference comparative examples in Tables 3, 4, ..., and 12, respectively.

<Abrasion resistance>

The volume loss of the vulcanized rubber compositions was measured with a laboratory abrasion and skid tester (LAT tester) at a load of 50 N, a speed of 20 km/h, and a slip angle of 5 degrees. The volume losses are expressed as an index (abrasion resistance index), with the corresponding reference comparative example set equal to 100. A higher index indicates better abrasion resistance.

<Fuel economy>

The tan $\delta$ of the vulcanized rubber compositions was determined using a spectrometer (Ueshima Seisakusho Co., Ltd.) at a dynamic strain amplitude of 1%, a frequency of 10 Hz, and a temperature of 50°C. The tan 5 values are expressed as an index (fuel economy index), with the corresponding reference comparative example set equal to 100. A higher index indicates a lower rolling resistance and better fuel economy.

<Wet grip performance>

The test tires of each formulation example were mounted on all wheels of a vehicle (front-engine, front-wheel-drive car of 2000 cc displacement made in Japan), and the braking distance of the vehicle with an initial speed of 100 km/h on wet asphalt was determined. The braking distances are expressed as an index (wet grip performance index), with the corresponding reference comparative example set equal to 100. A higher index indicates better wet grip performance.

[Table 3]

| | | Example | | | | Comparative Example | | | |
|---|---|---|---|---|---|---|---|---|---|
| | | 1-1 | 1-2 | 1-3 | 1-4 | 1-1 | 1-2 | 1-3 | 1-4 |
| Formulation (parts by mass) | Copolymer 1 | 20 | 20 | — | — | — | — | — | — |
| | Copolymer 2 | — | — | 20 | 20 | — | — | — | — |
| | Copolymer 3 | — | — | — | — | 20 | 20 | — | — |
| | Copolymer 4 | — | — | — | — | — | — | 20 | 20 |
| | Natural rubber | 60 | 60 | 60 | 60 | 60 | 60 | 60 | 60 |
| | Polybutadiene rubber | 20 | 20 | 20 | 20 | 20 | 20 | 20 | 20 |
| | Silica A | 25 | 25 | 25 | 25 | 25 | 25 | 25 | 25 |
| | Silane coupling agent A | 2 | 2 | 2 | 2 | 2 | 2 | 2 | 2 |
| | Carbon black A | 30 | 30 | 30 | 30 | 30 | 30 | 30 | 30 |
| | Oil | 10 | 10 | 10 | 10 | 10 | 10 | 10 | 10 |
| | Antioxidant | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 |
| | Zinc oxide | — | — | — | — | — | — | — | — |
| | Particulate zinc carrier | 1.6 | 0.8 | 1.6 | 0.8 | 1.6 | 0.8 | 1.6 | 0.8 |
| | Wax | 1 | 1 | 1 | 1 | 1 | 1 | 1 | 1 |
| | Processing aid | 1 | 1 | 1 | 1 | 1 | 1 | 1 | 1 |
| | Sulfur | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 |
| | Vulcanization accelerator 2 | 1 | 1 | 1 | 1 | 1 | 1 | 1 | 1 |
| Evaluation | Abrasion resistance index | 111 | 112 | 109 | 110 | 100 | 100 | 104 | 106 |
| | Wet grip performance index | 110 | 111 | 108 | 109 | 100 | 100 | 105 | 103 |
| | Fuel economy index | 109 | 106 | 111 | 110 | 100 | 98 | 90 | 94 |

[Table 4]

| | | Example | | | | Comparative Example | | | |
|---|---|---|---|---|---|---|---|---|---|
| | | 2-1 | 2-2 | 2-3 | 2-4 | 2-1 | 2-2 | 2-3 | 2-4 |
| Formulation (parts by mass) | Copolymer 1 | 20 | 20 | — | — | — | — | — | — |
| | Copolymer 2 | — | — | 20 | 20 | — | — | — | — |
| | Copolymer 3 | — | — | — | — | 20 | 20 | — | — |
| | Copolymer 4 | — | — | — | — | — | — | 20 | 20 |
| | Natural rubber | 60 | 60 | 60 | 60 | 60 | 60 | 60 | 60 |
| | Polybutadiene rubber | 20 | 20 | 20 | 20 | 20 | 20 | 20 | 20 |
| | Silica A | — | — | — | — | — | — | — | — |
| | Silica B | 25 | — | 25 | — | 25 | — | 25 | — |
| | Silica C | — | 25 | — | 25 | — | 25 | — | 25 |
| | Silane coupling agent A | 2 | 2 | 2 | 2 | 2 | 2 | 2 | 2 |
| | Carbon black A | 30 | 30 | 30 | 30 | 30 | 30 | 30 | 30 |
| | Oil | 10 | 10 | 10 | 10 | 10 | 10 | 10 | 10 |
| | Antioxidant | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 |
| | Wax | 1 | 1 | 1 | 1 | 1 | 1 | 1 | 1 |
| | Processing aid | 1 | 1 | 1 | 1 | 1 | 1 | 1 | 1 |
| | Sulfur | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 |
| | Vulcanization accelerator 2 | 1 | 1 | 1 | 1 | 1 | 1 | 1 | 1 |
| Evaluation | Abrasion resistance index | 110 | 111 | 108 | 109 | 100 | 101 | 106 | 104 |
| | Wet grip performance index | 109 | 110 | 106 | 109 | 100 | 100 | 102 | 103 |
| | Fuel economy index | 109 | 108 | 114 | 110 | 100 | 98 | 95 | 93 |

[Table 5]

| | | Example | | | | Comparative Example | | | |
|---|---|---|---|---|---|---|---|---|---|
| | | 3-1 | 3-2 | 3-3 | 3-4 | 3-1 | 3-2 | 3-3 | 3-4 |
| Formulation (parts by mass) | Copolymer 1 | 20 | 20 | – | – | – | – | – | – |
| | Copolymer 2 | – | – | 20 | 20 | – | – | – | – |
| | Copolymer 3 | – | – | – | – | 20 | 20 | – | – |
| | Copolymer 4 | – | – | – | – | – | – | 20 | 20 |
| | Natural rubber | 60 | 60 | 60 | 60 | 60 | 60 | 60 | 60 |
| | Polybutadiene rubber | 20 | 20 | 20 | 20 | 20 | 20 | 20 | 20 |
| | Silica A | 25 | 25 | 25 | 25 | 25 | 25 | 25 | 25 |
| | Silane coupling agent A | 2 | 2 | 2 | 2 | 2 | 2 | 2 | 2 |
| | Carbon black A | – | – | – | – | – | – | – | – |
| | Carbon black B | 30 | – | 30 | – | 30 | – | 30 | – |
| | Carbon black C | – | 30 | – | 30 | – | 30 | – | 30 |
| | Oil | 10 | 10 | 10 | 10 | 10 | 10 | 10 | 10 |
| | Antioxidant | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 |
| | Wax | 1 | 1 | 1 | 1 | 1 | 1 | 1 | 1 |
| | Processing aid | 1 | 1 | 1 | 1 | 1 | 1 | 1 | 1 |
| | Sulfur | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 |
| | Vulcanization accelerator 2 | 1 | 1 | 1 | 1 | 1 | 1 | 1 | 1 |
| Evaluation | Abrasion resistance index | 110 | 112 | 108 | 109 | 100 | 100 | 105 | 104 |
| | Wet grip performance index | 110 | 109 | 107 | 108 | 100 | 101 | 103 | 104 |
| | Fuel economy index | 107 | 108 | 110 | 110 | 100 | 99 | 94 | 93 |

[Table 6]

| | | Example | | | | Comparative Example | | | |
|---|---|---|---|---|---|---|---|---|---|
| | | 4-1 | 4-2 | 4-3 | 4-4 | 4-1 | 4-2 | 4-3 | 4-4 |
| Formulation (parts by mass) | Copolymer 1 | 20 | 20 | — | — | — | — | — | — |
| | Copolymer 2 | — | — | 20 | 20 | — | — | — | — |
| | Copolymer 3 | — | — | — | — | 20 | 20 | — | — |
| | Copolymer 4 | — | — | — | — | — | — | 20 | 20 |
| | Natural rubber | 60 | 60 | 60 | 60 | 60 | 60 | 60 | 60 |
| | Polybutadiene rubber | 20 | 20 | 20 | 20 | 20 | 20 | 20 | 20 |
| | Silica A | 160 | 130 | 160 | 130 | 160 | 130 | 160 | 130 |
| | Silane coupling agent A | 12.8 | 10.4 | 12.8 | 10.4 | 12.8 | 10.4 | 12.8 | 10.4 |
| | Carbon black A | 30 | 30 | 30 | 30 | 30 | 30 | 30 | 30 |
| | Oil | 10 | 10 | 10 | 10 | 10 | 10 | 10 | 10 |
| | Antioxidant | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 |
| | Wax | 1 | 1 | 1 | 1 | 1 | 1 | 1 | 1 |
| | Processing aid | 1 | 1 | 1 | 1 | 1 | 1 | 1 | 1 |
| | Sulfur | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 |
| | Vulcanization accelerator 2 | 1 | 1 | 1 | 1 | 1 | 1 | 1 | 1 |
| Evaluation | Abrasion resistance index | 111 | 111 | 108 | 109 | 100 | 100 | 107 | 105 |
| | Wet grip performance index | 109 | 111 | 108 | 109 | 100 | 102 | 104 | 103 |
| | Fuel economy index | 108 | 108 | 112 | 110 | 100 | 98 | 92 | 90 |

[Table 7]

| | | Example | | | | Comparative Example | | | |
|---|---|---|---|---|---|---|---|---|---|
| | | 5-1 | 5-2 | 5-3 | 5-4 | 5-1 | 5-2 | 5-3 | 5-4 |
| Formulation (parts by mass) | Copolymer 1 | 20 | 20 | — | — | — | — | — | — |
| | Copolymer 2 | — | — | 20 | 20 | — | — | — | — |
| | Copolymer 3 | — | — | — | — | 20 | 20 | — | — |
| | Copolymer 4 | — | — | — | — | — | — | 20 | 20 |
| | Natural rubber | 60 | 60 | 60 | 60 | 60 | 60 | 60 | 60 |
| | Polybutadiene rubber | 20 | 20 | 20 | 20 | 20 | 20 | 20 | 20 |
| | Silica A | 25 | 25 | 25 | 25 | 25 | 25 | 25 | 25 |
| | Silane coupling agent A | 2 | 2 | 2 | 2 | 2 | 2 | 2 | 2 |
| | Carbon black A | 30 | 30 | 30 | 30 | 30 | 30 | 30 | 30 |
| | Oil | 60 | 80 | 60 | 80 | 60 | 80 | 60 | 80 |
| | Antioxidant | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 |
| | Wax | 1 | 1 | 1 | 1 | 1 | 1 | 1 | 1 |
| | Processing aid | 1 | 1 | 1 | 1 | 1 | 1 | 1 | 1 |
| | Sulfur | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 |
| | Vulcanization accelerator 2 | 1 | 1 | 1 | 1 | 1 | 1 | 1 | 1 |
| Evaluation | Abrasion resistance index | 111 | 111 | 109 | 108 | 100 | 100 | 105 | 104 |
| | Wet grip performance index | 110 | 111 | 107 | 109 | 100 | 100 | 102 | 103 |
| | Fuel economy index | 108 | 109 | 111 | 112 | 100 | 99 | 92 | 95 |

[Table 8]

| | | Example | | | | | | Comparative Example | | | | | |
|---|---|---|---|---|---|---|---|---|---|---|---|---|---|
| | | 6-1 | 6-2 | 6-3 | 6-4 | 6-5 | 6-6 | 6-1 | 6-2 | 6-3 | 6-4 | 6-5 | 6-6 |
| Formulation (parts by mass) | Copolymer 1 | 20 | 20 | 20 | 20 | 20 | — | — | — | — | — | — | — |
| | Copolymer 2 | — | — | — | — | — | 20 | — | — | — | — | — | — |
| | Copolymer 3 | — | — | — | — | — | — | 20 | 20 | 20 | 20 | 20 | — |
| | Copolymer 4 | — | — | — | — | — | — | — | — | — | — | — | 20 |
| | Natural rubber | 60 | 60 | 60 | 60 | 60 | 60 | 60 | 60 | 60 | 60 | 60 | 60 |
| | Polybutadiene rubber | 20 | 20 | 20 | 20 | 20 | 20 | 20 | 20 | 20 | 20 | 20 | 20 |
| | Silica A | 25 | 25 | 25 | 25 | 25 | 25 | 25 | 25 | 25 | 25 | 25 | 25 |
| | Silane coupling agent A | 2 | 2 | 2 | 2 | 2 | 2 | 2 | 2 | 2 | 2 | 2 | 2 |
| | Carbon black A | 30 | 30 | 30 | 30 | 30 | 30 | 30 | 30 | 30 | 30 | 30 | 30 |
| | Resin A | 5 | — | — | — | — | 5 | 5 | — | — | — | — | 5 |
| | Resin B | — | 5 | — | — | — | — | — | 5 | — | — | — | — |
| | Resin C | — | — | 5 | — | — | — | — | — | 5 | — | — | — |
| | Resin D | — | — | — | 5 | — | — | — | — | — | 5 | — | — |
| | Resin E | — | — | — | — | 5 | — | — | — | — | — | 5 | — |
| | Oil | 10 | 10 | 10 | 10 | 10 | 10 | 10 | 10 | 10 | 10 | 10 | 10 |
| | Antioxidant | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 |
| | Processing aid | 1 | 1 | 1 | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 |
| | Vulcanization accelerator 2 | 1 | 1 | 1 | 1 | 1 | 1 | 1 | 1 | 1 | 1 | 1 | 1 |
| Evaluation | Abrasion resistance index | 111 | 112 | 109 | 109 | 112 | 112 | 100 | 101 | 100 | 100 | 101 | 104 |
| | Wet grip performance index | 109 | 110 | 115 | 112 | 112 | 107 | 100 | 101 | 104 | 103 | 103 | 106 |
| | Fuel economy index | 108 | 107 | 106 | 108 | 108 | 112 | 100 | 98 | 97 | 96 | 98 | 93 |

[Table 9]

| | | Example | | Comparative Example | |
|---|---|---|---|---|---|
| | | 7-1 | 7-2 | 7-1 | 7-2 |
| Formulation (parts by mass) | Copolymer 1 | 20 | — | — | — |
| | Copolymer 2 | — | 20 | — | — |
| | Copolymer 3 | — | — | 20 | — |
| | Copolymer 4 | — | — | — | 20 |
| | Modified conjugated diene polymer | 20 | 20 | 20 | 20 |
| | Natural rubber | 60 | 60 | 60 | 60 |
| | Polybutadiene rubber | — | — | — | — |
| | Silica A | 25 | 25 | 25 | 25 |
| | Silane coupling agent A | 2 | 2 | 2 | 2 |
| | Carbon black A | 30 | 30 | 30 | 30 |
| | Oil | 10 | 10 | 10 | 10 |
| | Antioxidant | 1.5 | 1.5 | 1.5 | 1.5 |
| | Stearic acid | 2 | 2 | 2 | 2 |
| | Zinc oxide | 2.5 | 2.5 | 2.5 | 2.5 |
| | Wax | 1 | 1 | 1 | 1 |
| | Processing aid | 1 | 1 | 1 | 1 |
| | Sulfur | 1.5 | 1.5 | 1.5 | 1.5 |
| | Vulcanization accelerator 1 | 2 | 2 | 2 | 2 |
| | Vulcanization accelerator 2 | 1 | 1 | 1 | 1 |
| Evaluation | Abrasion resistance index | 111 | 109 | 100 | 106 |
| | Wet grip performance index | 111 | 108 | 100 | 103 |
| | Fuel economy index | 109 | 110 | 100 | 92 |

[Table 10]

| | | Example | | | | Comparative Example | | | |
|---|---|---|---|---|---|---|---|---|---|
| | | 8-1 | 8-2 | 8-3 | 8-4 | 8-1 | 8-2 | 8-3 | 8-4 |
| Formulation (parts by mass) | Copolymer 1 | 20 | 20 | — | — | — | — | — | — |
| | Copolymer 2 | — | — | 20 | 20 | — | — | — | — |
| | Copolymer 3 | — | — | — | — | 20 | 20 | — | — |
| | Copolymer 4 | — | — | — | — | — | — | 20 | 20 |
| | Natural rubber | 60 | 60 | 60 | 60 | 60 | 60 | 60 | 60 |
| | Polybutadiene rubber | 20 | 20 | 20 | 20 | 20 | 20 | 20 | 20 |
| | Silica A | 25 | 25 | 25 | 25 | 25 | 25 | 25 | 25 |
| | Silane coupling agent A | 2 | 2 | 2 | 2 | 2 | 2 | 2 | 2 |
| | Carbon black A | 30 | 30 | 30 | 30 | 30 | 30 | 30 | 30 |
| | Oil | 10 | 10 | 10 | 10 | 10 | 10 | 10 | 10 |
| | Antioxidant | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 |
| | Wax | 1 | 1 | 1 | 1 | 1 | 1 | 1 | 1 |
| | Processing aid | 1 | 1 | 1 | 1 | 1 | 1 | 1 | 1 |
| | Sulfur | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 |
| | Vulcanization accelerator 2 | 1 | 1 | 1 | 1 | 1 | 1 | 1 | 1 |
| | Tetrazine compound A | 2 | — | 2 | — | 2 | — | 2 | — |
| | Tetrazine compound B | — | 2 | — | 2 | — | 2 | — | 2 |
| Evaluation | Abrasion resistance index | 111 | 112 | 109 | 108 | 100 | 100 | 106 | 104 |
| | Wet grip performance index | 109 | 111 | 107 | 109 | 100 | 101 | 104 | 103 |
| | Fuel economy index | 108 | 107 | 111 | 109 | 100 | 99 | 94 | 93 |

[Table 11]

| | | Example | | | | Comparative Example | | | |
|---|---|---|---|---|---|---|---|---|---|
| | | 9-1 | 9-2 | 9-3 | 9-4 | 9-1 | 9-2 | 9-3 | 9-4 |
| Formulation (parts by mass) | Copolymer 1 | 20 | 20 | — | — | — | — | — | — |
| | Copolymer 2 | — | — | 20 | 20 | — | — | — | — |
| | Copolymer 3 | — | — | — | — | 20 | 20 | — | — |
| | Copolymer 4 | — | — | — | — | — | — | 20 | 20 |
| | Natural rubber | 60 | 60 | 60 | 60 | 60 | 60 | 60 | 60 |
| | Polybutadiene rubber | 20 | 20 | 20 | 20 | 20 | 20 | 20 | 20 |
| | Silica A | 25 | 25 | 25 | 25 | 25 | 25 | 25 | 25 |
| | Silane coupling agent A | — | — | — | — | — | — | — | — |
| | Silane coupling agent B | 2 | — | 2 | — | 2 | — | 2 | — |
| | Silane coupling agent C | — | 1 | — | 1 | — | 1 | — | 1 |
| | Carbon black A | 30 | 30 | 30 | 30 | 30 | 30 | 30 | 30 |
| | Oil | 10 | 10 | 10 | 10 | 10 | 10 | 10 | 10 |
| | Antioxidant | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 |
| | Wax | 1 | 1 | 1 | 1 | 1 | 1 | 1 | 1 |
| | Processing aid | 1 | 1 | 1 | 1 | 1 | 1 | 1 | 1 |
| | Sulfur | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 |
| | Vulcanization accelerator 2 | 1 | 1 | 1 | 1 | 1 | 1 | 1 | 1 |
| Evaluation | Abrasion resistance index | 111 | 112 | 110 | 110 | 100 | 101 | 106 | 106 |
| | Wet grip performance index | 110 | 111 | 107 | 110 | 100 | 100 | 103 | 103 |
| | Fuel economy index | 108 | 108 | 111 | 109 | 100 | 100 | 94 | 93 |

[Table 12]

| | | Example | | | | | | Comparative Example | | | | | |
|---|---|---|---|---|---|---|---|---|---|---|---|---|---|
| | | 10-1 | 10-2 | 10-3 | 10-4 | 10-5 | 10-6 | 10-1 | 10-2 | 10-3 | 10-4 | 10-5 | 10-6 |
| Formulation (parts by mass) | Copolymer 1 | 20 | 20 | 20 | — | — | — | — | — | — | — | — | — |
| | Copolymer 2 | — | — | — | 20 | 20 | 20 | — | — | — | — | — | — |
| | Copolymer 3 | — | — | — | — | — | — | 20 | 20 | 20 | — | — | — |
| | Copolymer 4 | — | — | — | — | — | — | — | — | — | 20 | 20 | 20 |
| | Natural rubber | 60 | 60 | 60 | 60 | 60 | 60 | 60 | 60 | 60 | 60 | 60 | 60 |
| | Polybutadiene rubber | 20 | 20 | 20 | 20 | 20 | 20 | 20 | 20 | 20 | 20 | 20 | 20 |
| | Silica A | 25 | 25 | 25 | 25 | 25 | 25 | 25 | 25 | 25 | 25 | 25 | 25 |
| | Silane coupling agent A | 2 | 2 | 2 | 2 | 2 | 2 | 2 | 2 | 2 | 2 | 2 | 2 |
| | Carbon black A | 30 | 30 | 30 | 30 | 30 | 30 | 30 | 30 | 30 | 30 | 30 | 30 |
| | Oil | — | — | — | — | — | — | — | — | — | — | — | — |
| | Farnesene resin A | 10 | — | — | 10 | — | — | 10 | — | — | 10 | — | — |
| | Farnesene resin B | — | 10 | — | — | 10 | — | — | 10 | — | — | 10 | — |
| | Farnesene resin C | — | — | 10 | — | — | 10 | — | — | 10 | — | — | 10 |
| | Antioxidant | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 |
| | Processing aid | 1 | 1 | 1 | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 2 | 2 | 2 | 2 | 2 | 2 | 2 | 2 | 2 | 2 | 2 | 2 |
| | Vulcanization accelerator 2 | 1 | 1 | 1 | 1 | 1 | 1 | 1 | 1 | 1 | 1 | 1 | 1 |
| Evaluation | Abrasion resistance index | 111 | 110 | 109 | 108 | 108 | 109 | 100 | 101 | 100 | 106 | 105 | 105 |
| | Wet grip performance index | 110 | 109 | 111 | 107 | 107 | 108 | 100 | 101 | 97 | 104 | 106 | 100 |
| | Fuel economy index | 109 | 111 | 108 | 110 | 110 | 109 | 100 | 98 | 102 | 93 | 88 | 96 |

As demonstrated in Tables 3 to 12, the examples which contained a rubber component including a specific aromatic vinyl-conjugated diene copolymer, carbon black, and a specific silica achieved a balanced improvement of abrasion resistance, wet grip performance, and fuel economy.

Provided is a pneumatic tire that provides a balanced improvement of abrasion resistance, wet grip performance, and fuel economy. A rubber composition for tires containing: a rubber component including an aromatic vinyl-conjugated diene copolymer that contains aromatic vinyl units derived from an aromatic vinyl compound and conjugated diene units derived from a conjugated diene compound; carbon black; and a silica having a $N_2SA$ of 40 $m^2/g$ or more, the copolymer containing at least 80% of isolated aromatic vinyl units based on the total aromatic vinyl units, the copolymer having a $\Delta Tg$ of more than 10°C but less than 20°C as determined by DSC, the rubber component including, based on 100% by mass thereof, 1-60% by mass of the copolymer and 0-99% by mass of an isoprene-based rubber, the rubber composition containing 10 parts by mass or more of the silica per 100 parts by mass of the rubber component.

## Claims

1. A pneumatic tire, comprising a cap tread formed from a rubber composition for tires, the rubber composition comprising:

   a rubber component including an aromatic vinyl-conjugated diene copolymer that comprises aromatic vinyl units derived from an aromatic vinyl compound and conjugated diene units derived from a conjugated diene compound;

carbon black; and
a silica having a nitrogen adsorption specific surface area of 40 $m^2/g$ or more,
the copolymer comprising at least 80% of isolated aromatic vinyl units, in which the number of repeating aromatic vinyl units in the copolymer chain is one, i.e., in which aromatic vinyl units are not sequentially connected, based on the total aromatic vinyl units,
the copolymer having a glass transition temperature width, which is defined as the difference between the extrapolated onset and extrapolated end of the baseline shift associated with the transition in the heat flow curve, i.e. the temperature difference between the inflection points in the glass transition temperature range, of more than 10°C but less than 20°C as determined by differential scanning calorimetry,
the rubber component including, based on 100% by mass thereof, 1 to 60% by mass of the copolymer and 0 to 99% by mass of an isoprene-based rubber,
the rubber composition comprising 10 parts by mass or more of the silica per 100 parts by mass of the rubber component.

**2.** The pneumatic tire according to claim 1,
wherein the rubber composition comprises a particulate zinc carrier that comprises a silicate particle and finely divided zinc oxide or finely divided basic zinc carbonate supported on a surface of the silicate particle.

**3.** The pneumatic tire according to claim 1 or 2,
wherein the silica has a nitrogen adsorption specific surface area of 160 $m^2/g$ or more.

**4.** The pneumatic tire according to any one of claims 1 to 3,
wherein the carbon black has an oil absorption number of compressed sample of 100 to 180 mL/100 g.

**5.** The pneumatic tire according to any one of claims 1 to 4,
wherein the rubber composition comprises 90 parts by mass or more of the silica per 100 parts by mass of the rubber component.

**6.** The pneumatic tire according to any one of claims 1 to 5,
wherein the rubber composition comprises a plasticizer in an amount of 50 parts by mass or more per 100 parts by mass of the rubber component.

**7.** The pneumatic tire according to any one of claims 1 to 6, wherein the rubber composition comprises a resin.

**8.** The pneumatic tire according to any one of claims 1 to 7, wherein the rubber component includes a modified polymer.

**9.** The pneumatic tire according to any one of claims 1 to 8,
wherein the rubber composition comprises a tetrazine compound represented by the following formula (1):

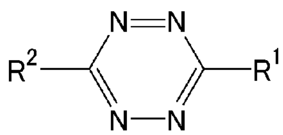

(1)

wherein $R^1$ and $R^2$ may be the same or different and each represent a hydrogen atom, $-COOR^3$ in which $R^3$ represents either a hydrogen atom or an alkyl group, or a C1-C11 monovalent hydrocarbon group optionally containing a heteroatom, and $R^1$ and $R^2$ may each form a salt.

**10.** The pneumatic tire according to any one of claims 1 to 9,
wherein the rubber composition comprises a mercapto silane coupling agent.

**11.** The pneumatic tire according to any one of claims 1 to 10,
wherein the rubber composition comprises a farnesene resin produced by polymerizing farnesene.

## Patentansprüche

1. Luftreifen, umfassend eine aus einer Kautschukzusammensetzung für Reifen gebildete Decklauffläche, wobei die Kautschukzusammensetzung umfasst:

   eine Kautschukkomponente, die ein Copolymer aus aromatischem Vinyl-konjugiertem Dien einschließt, das aromatische Vinyleinheiten, die von einer aromatischen Vinylverbindung abgeleitet sind, und konjugierte Dieneinheiten, die von einer konjugierten Dienverbindung abgeleitet sind, umfasst;
   Ruß; und
   einem Siliciumdioxid mit einer spezifischen Stickstoffadsorptionsoberfläche von 40 $m^2/g$ oder mehr,
   wobei das Copolymer mindestens 80% isolierte aromatische Vinyleinheiten umfasst, wobei die Anzahl der sich wiederholenden aromatischen Vinyleinheiten in der Copolymerkette eins ist, d.h. in der aromatische Vinyleinheiten nicht sequentiell verbunden sind, bezogen auf die gesamten aromatischen Vinyleinheiten,
   wobei das Copolymer eine Glasübergangstemperaturbreite aufweist, die als die Differenz zwischen dem extrapolierten Beginn und dem extrapolierten Ende der Grundlinienverschiebung, die mit dem Übergang in der Wärmeflusskurve verbunden ist, d.h. der Temperaturdifferenz zwischen den Wendepunkten im Glasübergangstemperaturbereich, von mehr als 10°C, aber weniger als 20°C, bestimmt durch Differentialrasterkalorimetrie, definiert ist
   die Kautschukkomponente, die, bezogen auf 100 Masse-% davon, 1 bis 60 Masse-% des Copolymers und 0 bis 99 Masse-% eines Kautschuks auf Isoprenbasis enthält,
   wobei die Kautschukzusammensetzung 10 Massenteile oder mehr des Siliciumdioxids pro 100 Massenteile der Kautschukkomponente umfasst.

2. Luftreifen nach Anspruch 1,
   wobei die Kautschukzusammensetzung einen teilchenförmigen Zinkträger umfasst, der ein Silicatteilchen und fein verteiltes Zinkoxid oder fein verteiltes basisches Zinkcarbonat umfasst, das auf einer Oberfläche des Silicatteilchens getragen wird.

3. Luftreifen nach Anspruch 1 oder 2,
   wobei das Siliciumdioxid eine spezifische Stickstoffadsorptionsoberfläche von 160 $m^2/g$ oder mehr aufweist.

4. Luftreifen nach einem der Ansprüche 1 bis 3,
   wobei der Ruß eine Ölabsorptionszahl einer komprimierten Probe von 100 bis 180 mL/100 g aufweist.

5. Luftreifen nach einem der Ansprüche 1 bis 4,
   wobei die Kautschukzusammensetzung 90 Massenteile oder mehr des Siliciumdioxids pro 100 Massenteile der Kautschukkomponente umfasst.

6. Luftreifen nach einem der Ansprüche 1 bis 5,
   wobei die Kautschukzusammensetzung einen Weichmacher in einer Menge von 50 Massenteilen oder mehr pro 100 Massenteile der Kautschukkomponente umfasst.

7. Luftreifen nach einem der Ansprüche 1 bis 6,
   wobei die Kautschukzusammensetzung ein Harz umfasst.

8. Luftreifen nach einem der Ansprüche 1 bis 7,
   wobei die Kautschukkomponente ein modifiziertes Polymer enthält.

9. Luftreifen nach einem der Ansprüche 1 bis 8,
   wobei die Kautschukzusammensetzung eine Tetrazinverbindung, dargestellt durch die folgende Formel (1), umfasst:

   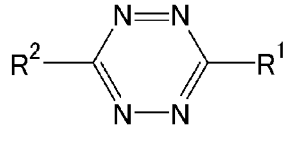 (1)

   wobei $R^1$ und $R^2$ gleich oder verschieden sein können und jeweils ein Wasserstoffatom, $-COOR^3$ darstellen, wobei

$R^3$ entweder ein Wasserstoffatom oder eine Alkylgruppe darstellt, oder eine einwertige C1-CII-Kohlenwasserstoffgruppe, die gegebenenfalls ein Heteroatom enthält, darstellt, und $R^1$ und $R^2$ jeweils ein Salz bilden können.

**10.** Luftreifen nach einem der Ansprüche 1 bis 9,
wobei die Kautschukzusammensetzung ein Mercaptosilan-Kopplungsmittel umfasst.

**11.** Luftreifen nach einem der Ansprüche 1 bis 10,
wobei die Kautschukzusammensetzung ein durch Polymerisation von Farnesen hergestelltes Farnesenharz umfasst.

## Revendications

**1.** Pneu comprenant une bande de roulement supérieure formée à partir d'une composition de caoutchouc pour pneus, la composition de caoutchouc comprenant :

un composant caoutchouc contenant un copolymère de diène conjugué et de vinylaromatique qui comprend des motifs vinylaromatiques dérivés d'un composé vinylaromatique et des motifs diènes conjugués dérivés d'un composé diène conjugué ;
du noir de carbone ; et
une silice ayant une surface spécifique par adsorption d'azote de 40 $m^2/g$ ou plus,
le copolymère comprenant au moins 80 %, par rapport aux motifs vinylaromatiques totaux, de motifs vinylaromatiques isolés, dans lequel le nombre de motifs vinylaromatiques répétitifs dans la chaîne copolymère est un, c'est-à-dire dans lequel les motifs vinylaromatiques ne sont pas connectés en séquence,
le copolymère ayant une largeur de températures de transition vitreuse, qui est définie par la différence entre le début extrapolé et la fin extrapolée du décalage de ligne de base associé à la transition dans la courbe de flux de chaleur, c'est-à-dire la différence de température entre les points d'inflexion dans la plage de températures de transition vitreuse, supérieure à 10°C mais inférieure à 20°C, telle que déterminée par calorimétrie à balayage différentiel,
le composant caoutchouc contenant, pour 100 % en masse de celui-ci, 1 à 60 % en masse du copolymère et 0 à 99 % en masse d'un caoutchouc à base d'isoprène,
la composition de caoutchouc comprenant 10 parties en masse ou plus de la silice pour 100 parties en masse du composant caoutchouc.

**2.** Pneu selon la revendication 1, dans lequel la composition de caoutchouc comprend un support en zinc particulaire qui comprend une particule de silicate et de l'oxyde de zinc finement divisé ou du carbonate de zinc basique finement divisé supporté sur une surface de la particule de silicate.

**3.** Pneu selon la revendication 1 ou 2, dans lequel la silice a une surface spécifique par adsorption d'azote de 160 $m^2/g$ ou plus.

**4.** Pneu selon l'une quelconque des revendications 1 à 3, dans lequel le noir de carbone a un indice d'absorption d'huile d'un échantillon compressé de 100 à 180 ml/100 g.

**5.** Pneu selon l'une quelconque des revendications 1 à 4, dans lequel la composition de caoutchouc comprend 90 parties en masse ou plus de la silice pour 100 parties en masse du composant caoutchouc.

**6.** Pneu selon l'une quelconque des revendications 1 à 5, dans lequel la composition de caoutchouc comprend un plastifiant en une quantité de 50 parties en masse ou plus de la silice pour 100 parties en masse du composant caoutchouc.

**7.** Pneu selon l'une quelconque des revendications 1 à 6, dans lequel la composition de caoutchouc comprend une résine.

**8.** Pneu selon l'une quelconque des revendications 1 à 7, dans lequel le composant caoutchouc contient un polymère modifié.

**9.** Pneu selon l'une quelconque des revendications 1 à 8, dans lequel la composition de caoutchouc comprend un

composé tétrazine représenté par la formule (1) suivante :

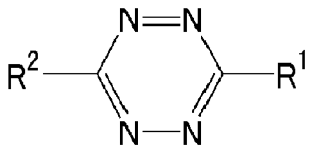

(1)

dans laquelle chacun de $R^1$ et $R^2$, qui peuvent être identiques ou différents, représente un atome d'hydrogène,-$COOR^3$ où $R^3$ représente soit un atome d'hydrogène soit un groupe alkyle, ou un groupe hydrocarboné monovalent en $C_1$ à $C_{11}$ contenant éventuellement un hétéroatome, et chacun de $R^1$ et $R^2$ peut former un sel.

**10.** Pneu selon l'une quelconque des revendications 1 à 9, dans lequel la composition de caoutchouc comprend un agent de couplage de type mercaptosilane.

**11.** Pneu selon l'une quelconque des revendications 1 à 10, dans lequel la composition de caoutchouc comprend une résine de farnésène produite par polymérisation de farnésène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004043598 A
- JP 2004277443 A


### Non-patent literature cited in the description


- *Fine Chemical,* 1994, vol. 23 (9), 5
- *J. Am. Chem. Soc.,* 1993, vol. 115, 4971
- *J. Am. Chem. Soc.,* 1995, vol. 117, 6465